(19)

Europäisches
Patentamt

European
Patent Office

Office européen
des brevets

(11)  **EP 3 119 090 A1**

(12)  **EUROPEAN PATENT APPLICATION**
published in accordance with Art. 153(4) EPC

(43) Date of publication:
**18.01.2017  Bulletin 2017/03**

(21) Application number: **15765411.2**

(22) Date of filing: **19.03.2015**

(51) Int Cl.:
*H04N 19/597* (2014.01)          *H04N 19/85* (2014.01)
*H04N 13/00* (2006.01)

(86) International application number:
**PCT/KR2015/002675**

(87) International publication number:
**WO 2015/142075 (24.09.2015 Gazette 2015/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority:  **19.03.2014  US 201461955349 P**

(71) Applicant: **Samsung Electronics Co., Ltd.
Gyeonggi-do 16677 (KR)**

(72) Inventors:
• **LEE, Jin-young
  Suwon-si
  Gyeonggi-do 441-768 (KR)**
• **MIKHAIL, Mishurovskiy
  Moscow 125445 (RU)**
• **PARK, Min-woo
  Yongin-si
  Gyeonggi-do 446-955 (KR)**

(74) Representative: **Appleyard Lees IP LLP
15 Clare Road
Halifax HX1 2HY (GB)**

(54)  **METHOD FOR PERFORMING FILTERING AT PARTITION BOUNDARY OF BLOCK RELATED TO 3D IMAGE**

(57)      Provided is a video decoding method according to one embodiment including obtaining a residual signal of a block of an image from a bitstream, determining at least one partition of the block of the image, based on a maskmap which is division information of the block, performing filtering at a boundary of the at least one partition, and generating a reconstructed signal based on a result of performing the filtering. The filtering is performed using at least one of the residual signal and a predicted signal corresponding to the residual signal.

FIG.  3A

# FIG. 3B

```
                    ┌─────────┐
                    │  START  │
                    └─────────┘
                         │
                         ▼
    ┌─────────────────────────────────────────┐
    │  DETERMINE AT LEAST ONE PARTITION OF BLOCK │
    │  OF IMAGE ON THE BASIS OF MASKMAP WHICH   │── 301
    │       IS BLOCK DIVISION INFORMATION       │
    └─────────────────────────────────────────┘
                         │
                         ▼
    ┌─────────────────────────────────────────┐
    │       PERFORM FILTERING AT BOUNDARY       │
    │        OF AT LEAST ONE PARTITION          │── 302
    └─────────────────────────────────────────┘
                         │
                         ▼
    ┌─────────────────────────────────────────┐
    │    GENERATE RECONSTRUCTED SIGNAL ON THE   │
    │   BASIS OF RESULT OF PERFORMING FILTERING │── 303
    └─────────────────────────────────────────┘
                         │
                         ▼
                    ┌─────────┐
                    │   END   │
                    └─────────┘
```

## Description

### TECHNICAL FIELD

One embodiment of the inventive concept relates to encoding and decoding video data, which includes performing filtering in the vicinity of a boundary between partitions of a block.

### BACKGROUND ART

As hardware for reproducing and storing high-definition or high-quality video content has been developed and distributed, there is a growing need to develop a video codec for effectively encoding or decoding high-definition or high-quality video content. Video content is encoded by converting and quantizing a residual signal obtained by subtracting between a predicted signal and an original signal. The video content may be reproduced by decoding the encoded video content.

In the encoding of the video content, partitions of a block corresponding to the original signal, the predicted signal, and the residual signal may be determined. However, in the encoding of the video content, the residual signal corresponding to the difference between the original signal and the predicted signal is transformed and quantized and then transmitted in a bitstream. Thus, when the difference between original or predicted signals of adjacent partitions is large, the difference between residual signals corresponding to the adjacent partition may be large. In this case, the quality of the video content to be reproduced, e.g., blocking artifact, may be degraded. Thus, a sharp change in a residual signal at a boundary between the partitions should be reduced.

### DETAILED DESCRIPTION OF THE INVENTIVE CONCEPT

### TECHNICAL PROBLEM

One or more embodiments may provide a method and apparatus for obtaining a residual signal which does not significantly differ between partitions of a block by performing filtering at a boundary between the partitions during encoding or decoding of video content.

### TECHNICAL SOLUTION

According to an aspect of the inventive concept, a video decoding method may include obtaining a residual signal of a block of an image from a bitstream; determining at least one partition of the block of the image on the basis of a maskmap which is division information of the block; performing filtering at a boundary of the at least one partition; and generating a reconstructed signal on the basis of a result of performing filtering. The filtering may be performed using at least one of the residual signal and a predicted signal corresponding to the residual signal.

### ADVANTAGEOUS EFFECTS

According to one embodiment, a boundary of a block of a color image or a depth image to be decoded or encoded may be determined on the basis of a maskmap related to the depth image or the color image and thus a boundary at which the differences between samples of the block is large may be flexibly and exactly detected. By performing filtering at the detected boundary, errors such as blocking artifact occurring at the boundary of the image to be decoded or encoded may be reduced and the image may be smoothly reproduced.

### DESCRIPTION OF THE DRAWINGS

FIG. 1 illustrates a multi-view video system according to an embodiment.

FIG. 2 is a diagram illustrating a texture image and depth images of a multi-view video.

FIG. 3A is a block diagram of a video decoding apparatus 30 according to an embodiment.

FIG. 3B is a flowchart of a process of performing a video decoding method, according to an embodiment.

FIG. 4A is a block diagram of a video encoding apparatus 40 according to an embodiment.

FIG. 4B is a flowchart of a process of performing a video encoding method according to an embodiment.

FIG. 5A illustrates a process of dividing a block of a color image into at least one partition by using maskmap information.

FIG. 5B illustrates a process of determining a maskmap regarding a shape in which a block of a depth image is divided according to an embodiment.

FIG. 6 illustrates a process of filtering one sample in a plurality of directions.

FIG. 7 is a block diagram of a video encoding apparatus based on coding units according to a tree structure, according to an embodiment.

FIG. 8 is a block diagram of a video decoding apparatus based on coding units according to a tree structure, according to an embodiment.

FIG. 9 is a diagram for describing a concept of coding units, according to an embodiment.

FIG. 10 is a block diagram of an image encoder based on coding units, according to an embodiment.

FIG. 11 is a block diagram of an image decoder based on coding units, according to an embodiment.

FIG. 12 is a diagram illustrating coding units according to depths and partitions, according to an embodiment.

FIG. 13 is a diagram for describing a relationship between a coding unit and transformation units, according to an embodiment.

FIG. 14 illustrates a plurality of pieces of encoding information according to depths, according to an embodiment.

FIG. 15 is a diagram of coding units according to depths, according to an embodiment.

FIGS. 16, 17, and 18 are diagrams for describing a relationship between coding units, prediction units, and transformation units, according to an embodiment.

FIG. 19 is a diagram for describing a relationship between a coding unit, a prediction unit, and a transformation unit, according to encoding mode information of Table 1.

FIG. 20 is a diagram of a physical structure of a disc in which a program is stored, according to an embodiment.

FIG. 21 is a diagram of a disc drive for recording and reading a program by using the disc.

FIG. 22 is a diagram of an overall structure of a content supply system for providing a content distribution service.

FIGS. 23 and 24 are diagrams respectively of an external structure and an internal structure of a mobile phone to which a video encoding method and a video decoding method according to the embodiments are applied.

FIG. 25 is a diagram of a digital broadcasting system to which a communication system according to the embodiment is applied.

FIG. 26 illustrates a network structure of a cloud computing system using a video encoding apparatus and a video decoding apparatus according to an embodiment.

**BEST MODE**

A video decoding method according to one embodiment may include obtaining a residual signal of a block of an image from a bitstream; determining at least one partition of the block of the image, based on a maskmap which is division information of the block; performing filtering at a boundary of the at least one partition; and generating a reconstructed signal on the basis of a result of performing filtering. The filtering may be performed using at least one of the residual signal and a predicted signal corresponding to the residual signal.

In the video decoding method according to one embodiment, when the image is a color image or a depth image, the maskmap corresponding to the image may be related to a shape in which either a block of the depth image or a block of the color image is divided.

In the video decoding method according to one embodiment, the maskmap may be divided into a region with samples each having a value which is greater than an average value of a plurality of samples of the block and a region with samples each having a value which is not greater than the average value.

In the video decoding method according to one embodiment, the performing of the filtering may include performing filtering based on a filtering coefficient, and the filtering coefficient may be adaptively set according to characteristics of the image.

In the video decoding method according to one embodiment, the performing of the filtering may include performing horizontal-direction filtering when the block is divided into a plurality of partitions by a vertical boundary, and performing vertical-direction filtering when the block is divided into a plurality of partitions by a horizontal boundary.

In the video decoding method according to one embodiment, when the block is divided into a plurality of partitions by a boundary including a vertical boundary and a horizontal boundary, the performing of the filtering may include performing at least one of horizontal-direction filtering and vertical-direction filtering on a sample adjacent to the vertical boundary and the horizontal boundary.

In the video decoding method according to one embodiment, the performing of the filtering may include detecting, from the maskmap, a plurality of samples corresponding to a position of a sample of the image to be filtered; comparing the plurality of detected samples with one another; and when a result of comparing the plurality of detected samples with one another reveals that the plurality of detected samples are different from one another, filtering a sample of the image corresponding to positions of the plurality of detected samples.

When the maskmap and the block are different in size, the video decoding method according to one embodiment may further include performing scaling to change the size of the maskmap to be the same as the size of the block.

A video encoding method according to one embodiment may include obtaining an original signal of a block of an image; determining at least one partition of the block of the image, based on a maskmap which is division information of the block; performing filtering at a boundary between the at least one partition; and generating a filtered residual signal, based on a result of performing the filtering. The filtering may be performed using at least one among the original signal, a predicted signal corresponding to the original signal, and a residual signal related to the original signal and the predicted signal.

In the video encoding method according to one embodiment, the maskmap may be obtained based on a shape in which a block of a depth image or a block of a color image is divided.

In the video encoding method according to one embodiment, the maskmap may be divided into a region with samples each having a value which is greater than an average value of a plurality of samples of the block and a region with samples each having a value which is not greater than the average value.

In the video encoding method according to one embodiment, the performing of the filtering may include performing filtering based on a filtering coefficient, and the filtering coefficient may be adaptively set according to characteristics of the image.

In the video encoding method according to one embodiment, the performing of the filtering may include performing horizontal-direction filtering when the block is divided into a plurality of partitions by a vertical boundary, and performing vertical-direction filtering when the block is divided into a plurality of partitions by a horizontal boundary.

In the video encoding method according to one embodiment, when the block is divided into a plurality of partitions by a boundary including a vertical boundary and a horizontal boundary, the performing of the filtering may include performing at least one of horizontal-direction filtering and vertical-direction filtering on a sample adjacent to the vertical boundary and the horizontal boundary.

In the video encoding method according to one embodiment, the performing of the filtering may include detecting, from the maskmap, a plurality of samples corresponding to a position of a sample of the image to be filtered; comparing the plurality of detected samples with one another; and when a result of comparing the plurality of detected samples with one another reveals that the plurality of detected samples are different from one another, filtering a sample of the image corresponding to positions of the plurality of detected samples.

When the maskmap and the block are different in size, the video encoding method according to one embodiment may further include performing scaling to change the size of the maskmap to be the same as the size of the block.

A video decoding apparatus according to one embodiment may include a residual signal obtainer configured to obtain a residual signal related to a block of an image from a bitstream; a partition determiner configured to determine at least one partition of the block of the image; a filtering unit configured to perform filtering at a boundary of the at least one partition; and a decoder configured to generate a reconstructed signal, based on at least one of a filtered predicted signal and a filtered residual signal.

A video encoding apparatus according to one embodiment may include a video encoding apparatus including a partition determiner configured to determine at least one partition of a block of an image; a filtering unit configured to perform filtering at a boundary of the at least one partition; and an encoder configured to generate a filtered residual signal, based on at least one among a filtered original signal, a filtered predicted signal, and a filtered residual signal.

According to one embodiment, there is provided a non-transitory computer-readable recording medium having recorded thereon a program for performing the video decoding method.

According to another embodiment, there is provided a non-transitory computer-readable recording medium having recorded thereon a program for performing the video encoding method.

## MODE OF THE INVENTIVE CONCEPT

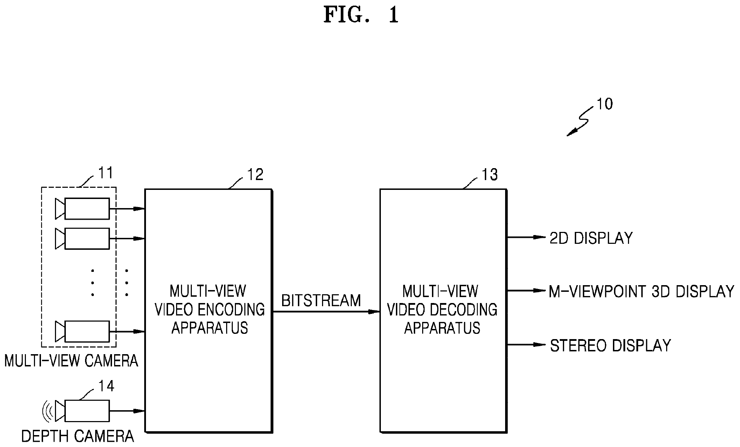

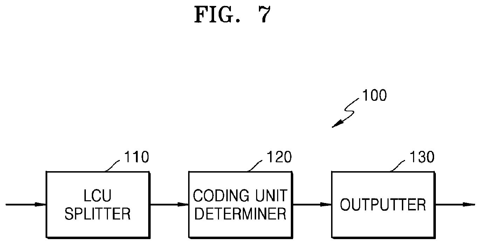

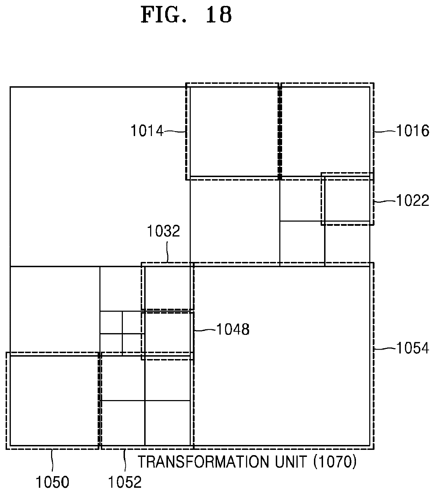

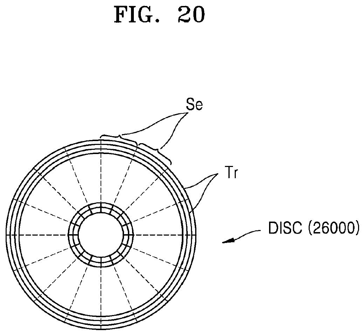

Hereinafter, with reference to FIGS. 1 through 6, a depth image decoding technique and a depth image encoding technique according to various embodiments will be described. Also, with reference to FIGS. 7 through 19, a video encoding technique and a video decoding technique according to various embodiments which are based on coding units having a tree structure and are applicable to the depth image decoding and encoding techniques will be described. Also, with reference to FIGS. 20 through 26, various embodiments to which the video encoding method and the video decoding method are applicable will be described.

Hereinafter, an "image" may refer to a still image or a moving image of a video, or a video itself.

Hereinafter, a "sample" may refer to data that is assigned to a sampling location of an image and is to be processed. For example, pixels of an image in a spatial domain may be samples.

Hereinafter, the term 'layer image' may refer to images of a specific viewpoint or of the same type. In a multi-view video, one layer image represents color images or depth images which are input from a specific viewpoint.

FIG. 1 illustrates a multi-view video system according to one embodiment.

A multi-view video system 10 includes a multi-view video encoding apparatus 12 which generates a bitstream by encoding a multi-view video obtained by two or more multi-view cameras 11, a depth image of the multi-view video obtained by a depth camera 14, and camera parameter information related to the multi-view cameras 11; and a multi-view video decoding apparatus 13 which decodes the bitstream and provides decoded multi-view video frames in various forms according to a viewer's request.

The multi-view cameras 11 are configured by combining a plurality of cameras of different viewpoints and provide a multi-view video image for each frame. In the following description, a color image obtained from each viewpoint according to a color format such as YUV, YCbCr, or the like may be referred to as a texture image.

The depth camera 14 provides a depth image representing depth information of a scene in the form of an 8-bit image with 256 gray levels or the like. The number of bits representing one pixel of the depth image is not limited to 8 bits and is variable. The depth camera 14 may measure distances to an object and a background from a camera by using infrared rays or the like, and provide a depth image having values proportional or inversely proportional to the distances. As described above, a one-view image includes a texture image and a depth image.

When the multi-view video encoding apparatus 12 encodes and transmits a depth image corresponding to a multi-view texture image, the multi-view video decoding apparatus 13 may provide a stereoscopic effect through an existing stereo image or a three-dimensional (3D) image by using the multi-view texture image and the depth image included in a bitstream and may also provide a result of synthesizing the existing stereo image or the 3D image with a 3D image of a viewpoint which a viewer wants. The bitstream of the multi-view video may include information representing whether each data packet contains information regarding the depth image, and image-type information representing whether each data packet is related to the texture image or the depth image. According to the hardware performance of a receiving side, the multi-view video decoding apparatus 13 decodes the multi-view video by using the depth image when the depth image is used to reconstruct the multi-view video, and may discard a data packet received in relation to the depth image when the depth image is unavailable since the hardware of the receiving side does not support the multi-view video. As described above, the receiving side may display a one-view image included in the multi-view video in the form of two-dimensional (2D) image when the multi-view video decoding apparatus 13 cannot display the multi-view video.

The amount of data of the multi-view video to be encoded increases in proportion to the number of viewpoints, and the depth image should be also encoded to provide a stereoscopic effect. Thus, a vast amount of data of the multi-view video should be efficiently compressed to realize the multi-view video system of FIG. 1.

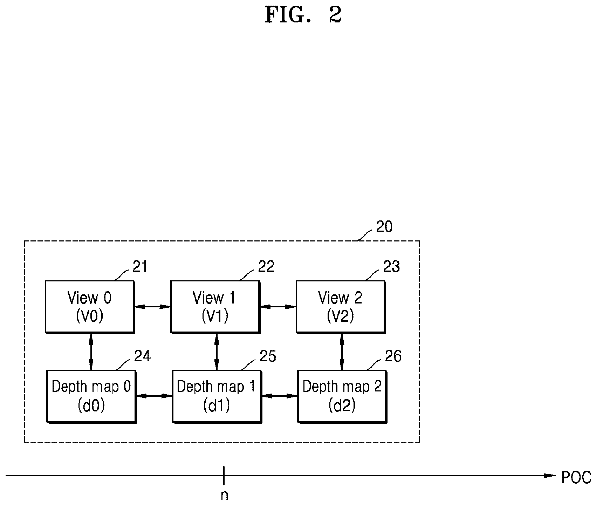

FIG. 2 is a diagram illustrating a texture image and depth images of a multi-view video.

FIG. 2 illustrates a texture picture v0 21 of a first viewpoint view 0, a depth image picture d0 24 corresponding to the texture picture v0 21 of the first viewpoint view 0, a texture picture v1 22 of a second viewpoint view 1, a depth image picture d1 25 corresponding to the texture picture v1 22 of the second viewpoint view 1, a texture picture v2 23 of a third viewpoint view 2, and a depth image picture d2 26 corresponding to the texture picture v2 23 of the third viewpoint view 2. Although FIG. 2 illustrates the multi-view texture pictures v0 21, v1 22, and v2 23 of the three viewpoints view 0, view 1, and view 2 and the depth images d0 24, d1 25, and d2 26 corresponding thereto, the number of viewpoints are not limited thereto and is variable. The multi-view texture pictures v0 21, v1 22, and v2 23 and the depth images d0 24, d1 25, and d2 26 corresponding thereto are pictures which are obtained at the same point of time and thus have the same picture order count (POC). In the following description, a picture group 1500 having the same POC, e.g., n (here, n denotes an integer), such as the multi-view texture pictures v0 21, v1 22, and v2 23 and the depth images d0 24, d1 25, and d2 26 corresponding thereto, may be referred to as an $n^{th}$ picture group. A picture group having the same POC may form one access unit. An order in which access units are to be encoded need not always be the same as an order in which images are captured (an order in which the images are obtained) or an order in which the images are displayed. The order in which the access units are to be encoded may be different from the order in which the images are captured or the order in which the images are displayed when a reference relation is taken into account.

A view identifier ViewId, which is a view-order index, may be used to specify a text image of each of the viewpoints and a viewpoint of a depth image. The same view identifier ViewId is assigned to a texture image and a depth image corresponding to the same viewpoint. The view identifier ViewId may be used to determine an encoding order. For example, the multi-view video encoding apparatus 12 may encode a multi-view video in an ascending order, starting from a texture image and a depth image assigned a smallest view identifier. That is, the multi-view video encoding apparatus 12 may encode a texture image and a depth image which are assigned a view identifier ViewId of 0 and then encode a texture image and a depth image which are assigned a view identifier ViewId of 1. When the encoding order is determined on the basis of the view identifier ViewId, the multi-view video decoding apparatus 13 may identify whether an error occurs in received data by using the view identifier ViewId in an environment in which an error is likely to occur. However, an order in which images of various viewpoints are to be encoded/decoded may be changed independently from the sizes of view identifiers ViewId.

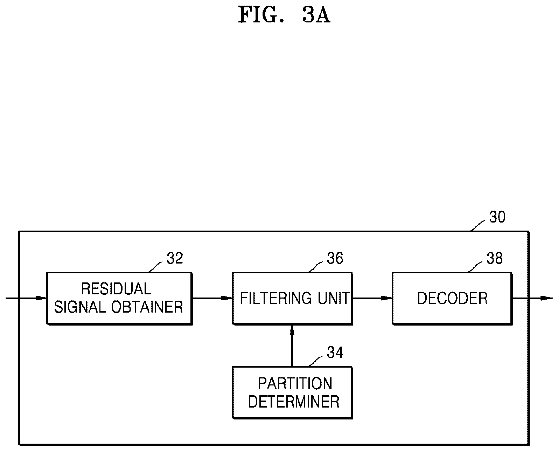

FIG. 3A is a block diagram of a video decoding apparatus 30 according to an embodiment. Referring to FIG. 3A, the video decoding apparatus 30 may include a residual signal obtainer 32, a partition determiner 34, a filtering unit 36, and a decoder 38.

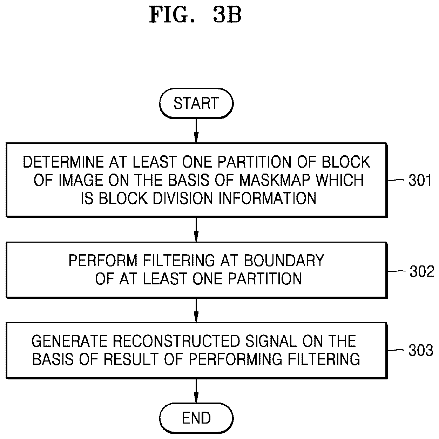

FIG. 3B is a flowchart of a process of performing a video decoding method, according to an embodiment. The video decoding method may be performed by the video decoding apparatus 30 of FIG. 3A. The video decoding method performed by the video decoding apparatus 30 will be described below.

In operation S301, the video decoding apparatus 30 may determine at least one partition of a block of an image on the basis of a maskmap which is division information of the block. The video decoding apparatus 30 may determine at least one partition of the block related to a boundary at which filtering is to be performed, based on a boundary of at least one partition according to the maskmap.

The residual signal obtainer 32 may obtain, from a bitstream, a residual signal related to an image to be decoded. The residual signal may be a signal filtered in an encoding process but may be a non-filtered signal.

The partition determiner 34 may determine at least one partition into which the block of the image is to be divided. In one embodiment, the block of the image may be a coding unit. When the block is a coding unit, one coding unit may be divided into at least one partition. Hereinafter, for convenience of explanation, it is assumed that the block is a coding unit.

In one embodiment, the partition determiner 34 may determine at least one partition into which the block of the image is to be divided on the basis of the maskmap. In detail, the maskmap may be information regarding a layer image which is different from the image to be decoded. In one embodiment, when a color image is to be decoded, the maskmap may be information regarding a depth image related to the color image. In another embodiment, when a depth image is to be decoded, the maskmap may be information regarding a color image related to the depth image. Hereinafter, for convenience of explanation, a case in which an image to be decoded is a color image will be described. A maskmap needed to decode the color image may be related to a shape in which a block of a depth image is divided.

The depth image may correspond to the same access unit as a color image to be decoded and may thus have the same POC as the color image. In one embodiment, the partition determiner 34 may determine a shape in which a block of the color image is to be divided by using maskmap information regarding division of a block of a depth image.

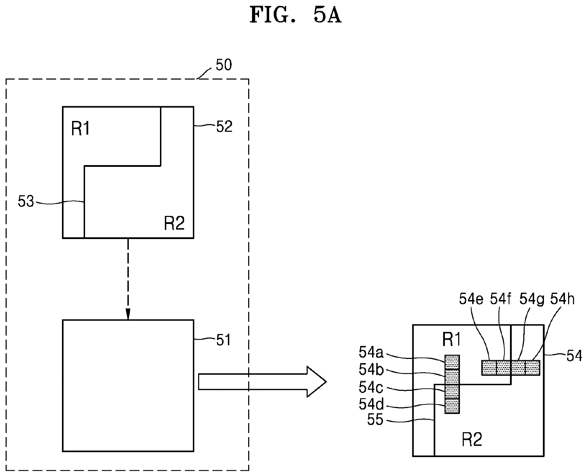

FIG. 5A illustrates a process of dividing a block of a color image into at least one partition by using maskmap information. Referring to FIG. 5A, a maskmap 52 contains information regarding a boundary 53 for dividing a block of a depth image into two different partitions. The maskmap 52 may be referred to divide a block 51 of a color image. Thus, the partition determiner 34 may divide the color image 51 into two partitions by referring to the maskmap 52 containing information regarding a boundary 52.

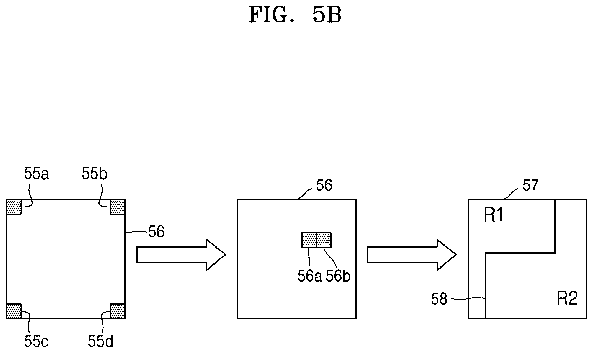

FIG. 5B illustrates a process of determining a maskmap regarding a shape in which a block of a depth image is divided according to an embodiment. Referring to FIG. 5B, in order to determine a maskmap corresponding to a block of a color image to be decoded, a block 56 of a depth image located at a position corresponding to the position of the block of the color image may be used. In detail, the block 56 of the depth image may be divided into a sample R1 having a value greater than an average value m of values of four samples 55a, 55b, 55c, and 55d located at vertices of the block 56 of the depth image, and a sample R2 having a value which is not greater than the average value m. When a result of comparing two adjacent samples 56a and 56b on a maskmap (which includes the sample R1 having the value greater than the average value m and the sample R2 having the value which is not greater than the average value m) in a horizontal (or vertical) direction reveals that the two samples 56a and 56b respectively have values of R1 and R2, a boundary between the two samples 56a and 56b may be determined as a boundary which divides a maskmap 57. The maskmap 57 may be divided into partitions by a boundary 58 between samples each having the value R1 or R2 on the basis of the result of comparing the two samples 56a and 56b.

However, the inventive concept should not be construed as being limited to using a maskmap including two partitions divided on the basis of one average value m as described above, and the number of pieces of information regarding partitions of a maskmap may be three or more. That is, two or more values may be used as reference values for dividing the maskmap, and thus the maskmap may be divided into three or more partitions.

The partition determiner 34 may determine a partition boundary of a block of a color image to be decoded by using the maskmap 57 related to division information of the block 56 of the depth image determined through the above process using the number of partitions of a maskmap and the number of pieces of information regarding the partitions of the maskmap. Referring back to FIG. 5A, at least one partition of a block 54 of a color image determined using a maskmap determined through the process of FIG. 5B may be determined, and filtering may be performed according to a boundary 55 which divides at least one partition.

According to one embodiment, in operation 302, the filtering unit 36 may filter samples of the boundary 55 of the at least one partition which divides the block 54 of the color image on the basis of the maskmap. Referring back to FIG. 5A, if it is determined, when the maskmap is referred to, that neighboring samples 54a and 54c of a sample 54b to be filtered have a different value R1 or R2, the sample 54b is filtered. Since the sample 54a has the value R1 and the sample 54c has the value R2 on the maskmap, the sample 54b of the block 54 of the color image is filtered. In one embodiment, the filtering unit 36 may determine a direction of filtering according to the shape of the boundary 55. For example, the filtering unit 36 performs vertical-direction filtering on the samples 54b and 54c corresponding to the boundary 55 when the boundary 55 dividing the block 54 of the color image is a horizontal boundary. As another example, the filtering unit 36 performs horizontal-direction filtering on samples 54f and 54g corresponding to the boundary 55 when the boundary 55 dividing the block 54 of the color image is a vertical boundary.

According to one embodiment, the filtering unit 36 may apply filtering to the samples of the boundary 55 of the at least one partition by using a filtering coefficient. A block filtered by the filtering unit 36 may contain a residual signal obtained from a bitstream or a predicted signal corresponding to the residual signal. The filtering unit 36 may filter at least one among the residual signal and the predicted signal corresponding to the residual signal. Here, the predicted signal may be a signal predicted in relation to the residual signal. A reconstructed signal related to the residual signal may be generated using the residual signal and the predicted signal. Furthermore, the reconstructed signal reconstructed using the residual signal and the predicted signal may be filtered. Referring to FIG. 5A, in order to filter the sample 54b, vertical-direction filtering may be performed on the sample 54b by applying the filtering coefficient to the sample 54b and the neighboring samples 54a and 54c thereof. In order to filter the sample 54c, vertical-direction filtering may be performed on the sample 54c by applying the filtering coefficient to the sample 54c and the neighboring samples 54b and 54d thereof. When the sample 54a has an index of (p-1), the sample 54b has an index of p, the sample 54c has an index of q, and the sample 54d has an index of (q-1), a result p' of filtering the sample 54b and a result q' of filtering the sample 54c may be determined by Equation 1 below.

[Equation 1]

$$p^{\cdot} = ((p-1) <\!\!< a + p <\!\!< b + (q) <\!\!< c + offset) >\!\!> d$$

$$q^{\cdot} = ((p) <\!\!< a + q <\!\!< b + (q-1) <\!\!< c + offset) >\!\!> d$$

In one embodiment, filtering coefficients a, b, and c which each determine a degree of filtering and the number thereof may be fixed but may be adaptively set according to characteristics of an image. For example, for a block of a high-complexity portion of an image, the number of filtering coefficients may be decreased and a ratio between the filtering coefficients may be adjusted to reduce a degree of filtering. Furthermore, neighboring samples to be used to perform filtering may be adjacent to a sample to be filtered but are not limited thereto and thus other pixels may be used. In addition, a filtering coefficient may be adaptively set according to the size of a block to be filtered. An offset value may be a value to be added to prevent a sharp change in a value of a sample between before the sample is filtered and after the sample is filtered. d may be a value for adjusting a degree of filtering according to one embodiment, and may be determined according to the filtering coefficients a, b, and c. Examples of an operator related to the value d may include various operators, including a shift operator.

The filtering unit 36 may perform horizontal-direction filtering on the samples 54f and 54g since the boundary 55 which divides the samples 54f and 54g is a vertical boundary. A process of performing horizontal-direction filtering may correspond to a process of performing the vertical-direction filtering and is thus not redundantly described here.

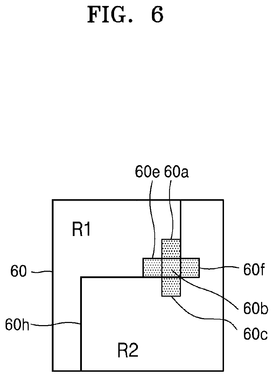

FIG. 6 illustrates a process of filtering one sample in a plurality of directions. In one embodiment, the filtering unit 36 may perform both vertical-direction filtering and horizontal-direction filtering on a sample 60b of a block 60 of a color image since a boundary 60h, which divides the block 60, includes both a horizontal boundary and a vertical boundary. Hereinafter, for convenience of explanation, it is assumed that horizontal-direction filtering is performed after vertical-direction filtering is performed. When a sample 60a has an index of (p-1), the sample 60b has an index of p, and a sample 60c has an index of q, a result p' of filtering the sample 60b may be determined by Equation 1 above. Furthermore, when the horizontal-direction filtering is performed after the vertical-direction filtering is performed, an index of a sample 60e may be (r-1), an index of the sample 60b may be p', and an index of a sample 60f may be s. That is, since the vertical-direction filtering has already been performed on the sample 60b, the index p' of the sample 60b may be used in performing horizontal-direction filtering. Thus, a result p'' of horizontal-direction filtering the sample 60b after vertical-direction filtering is performed may be determined by Equation 2 below.

[Equation 2]

$$p'' = ((r-1) << a + p' << b + (s) << c + offset) >> d$$

In one embodiment, the filtering unit 36 may perform horizontal-direction filtering on a sample and then perform horizontal-direction filtering on the sample but an order in which the sample is filtered is not limited thereto. That is, vertical-direction filtering and horizontal-direction filtering may be performed on the sample sequentially or simultaneously. As another example, only vertical-direction filtering or horizontal-direction filtering may be performed on the sample on the basis of a mode, a partition type, or a block size.

In operation 303, the decoder 38 may generate a reconstructed signal from the result of filtering at least one of the residual signal and the predicted signal corresponding to the residual signal by the filtering unit 36 in operation 302 at a boundary of the at least one partition determined by the partition determiner 34 in operation 301. In a process of decoding a color image, the video decoding apparatus 40 may generate a reconstructed signal from a residual signal obtained from a bitstream and a predicted signal corresponding to the residual signal. The residual signal obtained from the bitstream may be a filtered residual signal which is a result of performing filtering by a video encoding apparatus which will be described below but is not limited thereto and may be a non-filtered residual signal. When the filtering unit 36 filters the predicted signal, the decoder 38 may generate a reconstructed signal from the filtered predicted signal and the residual signal obtained from the bitstream. When the filtering unit 36 filters the residual signal obtained from the bitstream, the decoder 38 may generate a reconstructed signal from a filtered differential signal and the predicted signal. When the filtering unit 36 filters the predicted signal and the residual signal obtained from the bitstream, the decoder 38 may generate a reconstructed signal from the filtered predicted signal and the filtered residual signal. A process of filtering each of these signals may correspond to the process of performing filtering by the filtering unit 36 described above with reference to FIG. 5A and is not be redundantly described here. The process of generating the reconstructed signal by the decoder 38 may correspond to a process of decoding a 2D video and is thus not described here.

In one embodiment, the filtering unit 36, which filters a block of a color image, uses a maskmap regarding a depth image located at a position corresponding to the position of the block of the color image to be filtered. Thus, the positions of the maskmap and the block of the color image are difficult to be clearly compared with each other when the maskmap and the block of the color image are different in size. Thus, in order to solve this problem, scaling may be performed to adjust the size of the maskmap related to the depth image to be the same as the block of the color image.

In one embodiment, for efficient filtering, the video decoding apparatus 30 may determine whether filtering is to be performed on the basis of rate-distortion optimization. In another embodiment, the video decoding apparatus 30 may obtain, from a bitstream, a flag indicating whether filtering is performed or not, and determine whether filtering is to be performed or not on the basis of a value of the obtained flag.

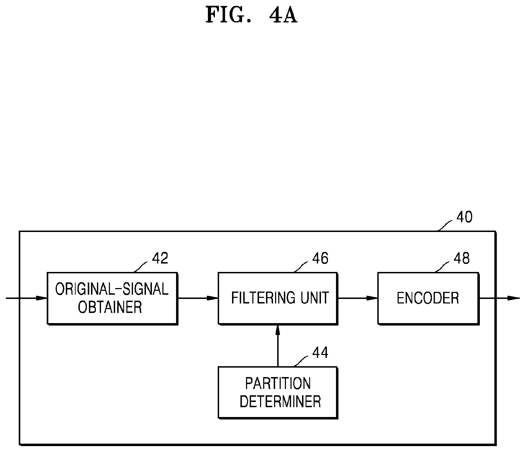

FIG. 4A is a block diagram of a video encoding apparatus 40 according to an embodiment. Referring to FIG. 4A, the video encoding apparatus 40 may include an original-signal obtainer 42, a partition determiner 44, a filtering unit 46, and an encoder 48.

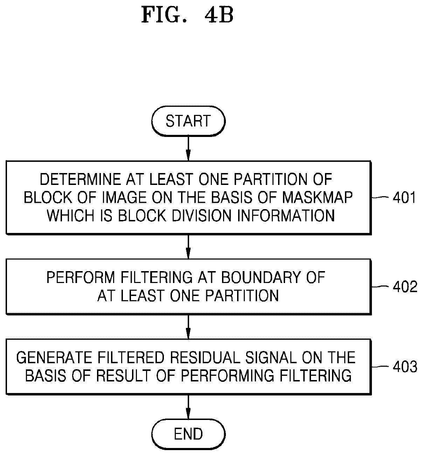

FIG. 4B is a flowchart of a process of performing a video encoding method according to an embodiment. The video encoding method may be performed by the video encoding apparatus 40 of FIG. 4A. The video encoding method performed by the video encoding apparatus 40 will be described below.

In operation 401, the video encoding apparatus 40 may determine at least one partition of a block of an image on the basis of a maskmap which is division information of the block. The video encoding apparatus 40 may determine at least one partition of the block related to a boundary at which filtering is to be performed on the basis of a boundary of at least one partition of the maskmap.

The original-signal obtainer 42 may obtain an original signal related to an image to be encoded. The partition determiner 44 may determine at least one partition into which a block of the image, which is to be encoded, is to be divided. In one embodiment, the block of the image may be a coding unit. Hereinafter, for convenience of explanation, it is assumed that the block is a coding unit.

In one embodiment, the partition determiner 44 may determine at least one partition into which the block of the image is to be divided on the basis of the maskmap. In detail, the maskmap may be information regarding a layer which is different from the image to be encoded. In one embodiment, when a color image is to be encoded, the maskmap may be information regarding a depth image related to the color image. In another embodiment, when a depth image is to be encoded, the maskmap may be information regarding a color image related to the depth image. Hereinafter, for convenience of explanation, it is assumed that an image to be encoded is a color image. A maskmap needed to encode the color image may be related to a shape in which a block of a depth image is divided.

In one embodiment, a depth image corresponds to the same access unit as the color image to be encoded and may thus have the same POC as the color image. In one embodiment, the partition determiner 44 may determine a shape in which the block of the color image is to be divided by using maskmap information for dividing a block of the depth image. FIG. 5A illustrates a process of dividing a block of a color image into at least one partition by using maskmap information. Referring to FIG. 5A, the maskmap 52 contains information regarding the boundary 53 for dividing a block of a depth image into two different partitions. The maskmap 52 may be referred to divide the block 51 of the color image. Thus, the partition determiner 44 may divide the color image 51 into two partitions by referring to the maskmap 52 containing information regarding the boundary 53.

FIG. 5B illustrates a process of determining a maskmap regarding a shape in which a block of a depth image is to be divided according to an embodiment. Referring to FIG. 5B, in order to determine a maskmap corresponding to a block of a color image to be decoded, a block 56 of a depth image located at a position corresponding to the position of the block of the color image may be used. In detail, the block 56 of the depth image may be divided into a sample R1 having a value greater than an average value m of values of four samples 55a, 55b, 55c, and 55d located at vertices of the block 56 of the depth image and a sample R2 having a value which is not greater than the average value m. When a result of comparing two adjacent samples 56a and 56b on a maskmap, which includes the sample R1 having the value greater than the average value m and the sample R2 having the value which is not greater than the average value m, in a horizontal (or vertical) direction reveals that the two samples 56a and 56b respectively have values R1 and R2, a boundary between the two samples 56a and 56b may be determined as a boundary which divides a maskmap 57. The maskmap 57 may be divided into partitions by a boundary 58 between samples each having the value R1 or R2 on the basis of the result of comparing the two samples 56a and 56b. However, the inventive concept should not be construed as being limited to using a maskmap including two partitions divided on the basis of one average value m as described above, and the number of pieces of information regarding partitions of a maskmap may be three or more. That is, two or more values may be used as reference values for dividing the maskmap, and thus the maskmap may be divided into three or more partitions. The partition determiner 44 may determine a partition boundary of a block of a color image to be encoded by using the maskmap 57 related to division information of the block 56 of the depth image determined through the above process using the number of partitions of a maskmap and the number of pieces of information regarding the partitions of the maskmap. Referring back to FIG. 5A, at least one partition of a block 54 of a color image determined using a maskmap determined through the process of FIG. 5B may be determined, and filtering may be performed according to a boundary 55 which divides the at least one partition.

In one embodiment, in operation 402, the filtering unit 46 may filter samples of the boundary 55 of the at least one partition into which the block 54 of the color image is divided, based on the maskmap. A block filtered by the filtering unit 46 may include an original signal obtained by the original-signal obtainer 32, a predicted signal corresponding to the original signal, or a residual signal corresponding to the original signal. That is, the filtering unit 36 may filter at least one among the original signal, the predicted signal, and the residual signal. Referring back to FIG. 5A, if it is determined, when the mask map is referred to, that the neighboring samples 54a and 54c of the sample 54b to be filtered have a different value R1 or R2, the sample 54b is filtered. Since the sample 54a has the value R1 and the sample 54c has the value R2 on the maskmap, the sample 54b of the block 54 of the color image is filtered. In one embodiment, the filtering unit 46 may determine a direction of filtering according to the shape of the boundary 55. For example, the filtering unit 46 performs vertical-direction filtering on the samples 54b and 54c corresponding to the boundary 55 when the boundary 55 dividing the block 54 of the color image is a horizontal boundary. As another example, the filtering unit 46 performs horizontal-direction filtering on the samples 54f and 54g corresponding to the boundary 55 when the boundary 55 dividing the block 54 of the color image is a vertical boundary.

In one embodiment, the filtering unit 46 may apply filtering to the samples of the boundary 55 of the at least one partition by using a filtering coefficient. An operation of the filtering unit 46 of the video encoding apparatus 40 related to the applying of the filtering to the samples of the boundary 55 may correspond to an operation of the filtering unit 36 of the video decoding apparatus 30 described above and is not described in detail here.

In operation 403, the encoder 48 may generate a bitstream including the filtered residual signal from the result of filtering at least one among the original signal, the predicted signal, and the residual signal by the filtering unit 46 in operation 402 at the boundary of the at least one partition determined by the partition determiner 44 in operation 401. According to a process of encoding the color image, the video encoding apparatus 40 may generate the residual signal from the original signal and the predicted signal corresponding to the original signal. In one embodiment, when the filtering unit 46 filters the original signal, the encoder 48 may generate the filtered residual signal on the basis of the filtered original signal and the predicted signal corresponding to the original signal, and generate the bitstream including the filtered residual signal. When the filtering unit 46 filters the predicted signal corresponding to the original signal, the encoder 48 may generate the filtered residual signal on the basis of the filtered predicted signal and the original signal, and generate the bitstream including the filtered residual signal. When the filtering unit 46 filters the residual signal obtained on the basis of the original signal and the predicted signal corresponding to the original signal, the encoder 48 may generate a bitstream including the filtered residual signal which is a result of filtering the residual signal. When the filtering unit 46 filters the original signal and the predicted signal corresponding to the original signal, the encoder 48 may generate the filtered residual signal on the basis of the filtered original signal and the filtered predicted signal and generate a bitstream including the filtered residual signal. A process of filtering each of these signals may correspond to the filtering process performed by the filtering unit 46 described above with reference to FIG. 5A and is not thus redundantly described here. A process of generating a bitstream may correspond to a process of generating a bitstream by encoding a filtered residual signal by the encoder 48 during a video encoding process and is thus not redundantly described here.

In one embodiment, the filtering unit 46 which filters a block of a color image uses a maskmap regarding a depth image located at a position corresponding to the position of the block of the color image to be filtered and thus the positions of the maskmap and the block of the color image are difficult to be clearly compared with each other when the maskmap and the block of the color image are different in size. Thus, in order to solve this problem, scaling may be performed to adjust the size of the maskmap related to the depth image to be the same as the block of the color image.

In one embodiment, the video encoding apparatus 40 may determine whether filtering is to be performed on the basis of rate-distortion optimization. In an encoding operation, in order to achieve an optimum encoding effect, whether a largest coding unit is to be divided into a plurality of coding units may be determined on the basis of the rate-distortion optimization. According to one embodiment, for efficient filtering, the video encoding apparatus 40 may determine whether filtering is to be performed on the basis of the rate-distortion optimization. In another embodiment, the video encoding apparatus 40 may generate a bitstream including a flag indicating whether filtering is performed or not.

FIG. 7 is a block diagram of a video encoding apparatus based on coding units according to tree structure 100, according to an embodiment.

The video encoding apparatus based on coding units according to tree structure 100 according to the embodiment includes a coding unit determiner 120 and an output unit 130. Hereinafter, for convenience of description, the video encoding apparatus based on coding units according to tree structure 100 according to the embodiment will be abbreviated to the 'video encoding apparatus 100'.

The coding unit determiner 120 may split a current picture based on a largest coding unit that is a coding unit having a maximum size for a current picture of an image. If the current picture is larger than the largest coding unit, image data of the current picture may be split into the at least one largest coding unit. The largest coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the largest coding unit, and as the depth deepens, deeper coding units according to depths may be split from the largest coding unit to a smallest coding unit. A depth of the largest coding unit is an uppermost depth and a depth of the smallest coding unit is a lowermost depth. Since a size of a coding unit corresponding to each depth decreases as the depth of the largest coding unit deepens, a coding unit corresponding to an upper depth may include a plurality of coding units corresponding to lower depths.

As described above, the image data of the current picture is split into the largest coding units according to a maximum size of the coding unit, and each of the largest coding units may include deeper coding units that are split according to depths. Since the largest coding unit according to an embodiment is split according to depths, the image data of a spatial domain included in the largest coding unit may be hierarchically classified according to depths.

A maximum depth and a maximum size of a coding unit, which limit the total number of times a height and a width of the largest coding unit are hierarchically split, may be predetermined.

The coding unit determiner 120 encodes at least one split region obtained by splitting a region of the largest coding unit according to depths, and determines a depth to output a finally encoded image data according to the at least one split region. That is, the coding unit determiner 120 determines a final depth by encoding the image data in the deeper coding units according to depths, according to the largest coding unit of the current picture, and selecting a depth having the least encoding error. The determined final depth and the encoded image data according to the determined coded depth are output to the output unit 130.

The image data in the largest coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one final depth may be selected for each largest coding unit.

The size of the largest coding unit is split as a coding unit is hierarchically split according to depths, and as the number of coding units increases. Also, even if coding units correspond to the same depth in one largest coding unit, it is determined whether to split each of the coding units corresponding to the same depth to a lower depth by measuring an encoding error of the image data of the each coding unit, separately. Accordingly, even when image data is included in one largest coding unit, the encoding errors may differ according to regions in the one largest coding unit, and thus the final depths may differ according to regions in the image data. Thus, one or more final depths may be determined in one largest coding unit, and the image data of the largest coding unit may be divided according to coding units of at least one final depth.

Accordingly, the coding unit determiner 120 according to an embodiment may determine coding units having a tree structure included in the largest coding unit. The 'coding units having a tree structure' according to an embodiment include coding units corresponding to a depth determined to be the final depth, from among all deeper coding units included in the largest coding unit. A coding unit of a final depth may be hierarchically determined according to depths in the same region of the largest coding unit, and may be independently determined in different regions. Equally, a final depth in a current region may be independently determined from a final depth in another region.

A maximum depth according to an embodiment is an index related to the number of splitting times from a largest coding unit to a smallest coding unit. A first maximum depth according to an embodiment may denote the total number of splitting times from the largest coding unit to the smallest coding unit. A second maximum depth according to an embodiment may denote the total number of depth levels from the largest coding unit to the smallest coding unit. For example, when a depth of the largest coding unit is 0, a depth of a coding unit, in which the largest coding unit is split once, may be set to 1, and a depth of a coding unit, in which the largest coding unit is split twice, may be set to 2. In this regard, if the smallest coding unit is a coding unit in which the largest coding unit is split four times, depth levels of depths 0, 1, 2, 3, and 4 exist, and thus the first maximum depth may be set to 4, and the second maximum depth may be set to 5.

Prediction encoding and transformation may be performed according to the largest coding unit. The prediction encoding and the transformation are also performed based on the deeper coding units according to a depth equal to or depths less than the maximum depth, according to the largest coding unit.

Since the number of deeper coding units increases whenever the largest coding unit is split according to depths, encoding, including the prediction encoding and the transformation, is performed on all of the deeper coding units generated as the depth deepens. Hereinafter, for convenience of description, the prediction encoding and the transformation will now be described based on a coding unit of a current depth, in a largest coding unit.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also select a data unit different from the coding unit so as to perform the prediction encoding on the image data in the coding unit.

In order to perform prediction encoding in the largest coding unit, the prediction encoding may be performed based on a coding unit corresponding to a final depth according to an embodiment, i.e., based on a coding unit that is no longer split to coding units corresponding to a lower depth. A partition obtained by splitting a coding unit may include the coding unit and a data unit obtained by splitting at least one of a height and a width of the coding unit. The partition may include data units splitting from the coding unit and may include a data unit having the same size as the coding unit. The partition that is a base of prediction may also be called a prediction unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition mode according to an embodiment may selectively include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, or partitions having arbitrary shapes.

A prediction mode of the prediction unit may be at least one of an intra mode, an inter mode, and a skip mode. For example, the intra mode and the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to an embodiment may perform not only the transformation on the image data in a coding unit based not only on the coding unit for encoding the image data, but also may perform the transformation on the image data based on a data unit that is different from the coding unit. In order to perform the transformation in the coding unit, the transformation may be performed based on a transformation unit having a size less than or equal to the coding unit. For example, the transformation unit may include a data unit for an intra mode and a transformation unit for an inter mode.

The transformation unit in the coding unit may be recursively split into smaller sized regions in a manner similar to that in which the coding unit is split according to the tree structure, according to an embodiment. Thus, residual data in the coding unit may be split according to the transformation unit having the tree structure according to transformation depths.

A transformation depth indicating the number of splitting times to reach the transformation unit by splitting the height and width of the coding unit may also be set in the transformation unit according to an embodiment. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Split information according to depths requires not only information about a depth but also requires information related to prediction encoding and transformation. Accordingly, the coding unit determiner 120 not only determines a depth having a least encoding error, but also determines a partition mode of splitting a prediction unit into a partition, a prediction mode according to prediction units, and a size of a transformation unit for transformation.

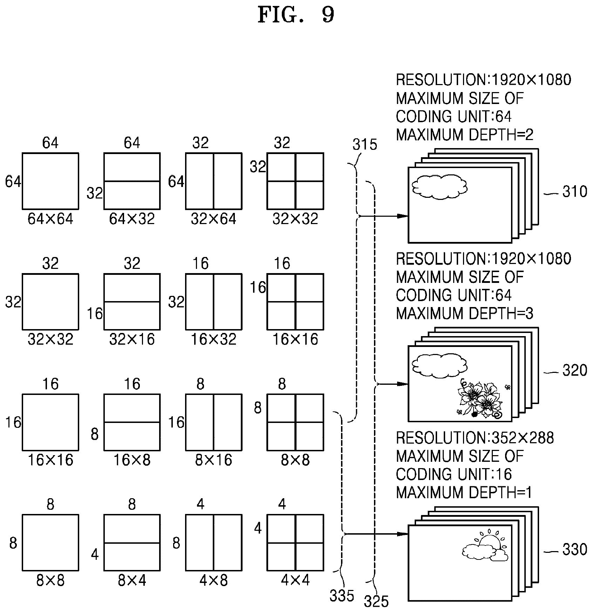

Coding units according to a tree structure in a largest coding unit and methods of determining a prediction unit/partition, and a transformation unit, according to an embodiment, will be described in detail later with reference to FIGS. 9 through 19.

The coding unit determiner 120 may measure an encoding error of deeper coding units according to depths by using Rate-Distortion Optimization based on Lagrangian multipliers.

The output unit 130 outputs the image data of the largest coding unit, which is encoded based on the at least one depth determined by the coding unit determiner 120, and split information according to the depth, in bitstreams.

The encoded image data may be obtained by encoding residual data of an image.

The split information according to depth may include information about the depth, about the partition mode in the prediction unit, about the prediction mode, and about split of the transformation unit.

The information about the final depth may be defined by using split information according to depths, which indicates whether encoding is performed on coding units of a lower depth instead of a current depth. If the current depth of the current coding unit is a depth, the current coding unit is encoded, and thus the split information may be defined not to split the current coding unit to a lower depth. On the other hand, if the current depth of the current coding unit is not the depth, the encoding is performed on the coding unit of the lower depth, and thus the split information may be defined to split the current coding unit to obtain the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one largest coding unit, and split information is determined for a coding unit of a depth, at least one piece of split information may be determined for one largest coding unit. Also, a depth of the image data of the largest coding unit may be different according to locations since the image data is hierarchically split according to depths, and thus a depth and split information may be set for the image data.

Accordingly, the output unit 130 according to an embodiment may assign a corresponding depth and encoding information about an encoding mode to at least one of the coding unit, the prediction unit, and a minimum unit included in the largest coding unit.

The minimum unit according to an embodiment is a square data unit obtained by splitting the smallest coding unit constituting the lowermost depth by 4. Alternatively, the minimum unit according to an embodiment may be a maximum square data unit that may be included in all of the coding units, prediction units, partition units, and transformation units included in the largest coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or group of pictures (GOPs), and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information related to prediction, prediction information, and slice type information.

In the video encoding apparatus 100 according to the simplest embodiment, the deeper coding unit may be a coding unit obtained by dividing a height or width of a coding unit of an upper depth, which is one layer above, by two. That is, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each largest coding unit, based on the size of the largest coding unit and the maximum depth determined considering characteristics of the current picture. Also, since encoding may be performed on each largest coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100 according to an embodiment, image compression efficiency may be increased since a coding unit is adjusted while considering characteristics of an image while increasing a maximum size of a coding unit while considering a size of the image.

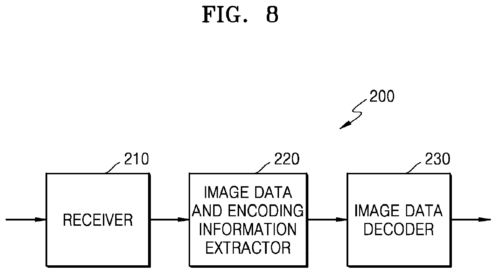

FIG. 8 is a block diagram of a video decoding apparatus based on coding units according to tree structure 200, according to various embodiments.

The video decoding apparatus involving video prediction based on coding units according to tree structure 200 according to an embodiment includes a receiver 210, an image data and encoding information extractor 220, and an image data decoder 230. For convenience of description, the video decoding apparatus involving video prediction based on coding units according to tree structure 200 according to the embodiment will be abbreviated to the 'video decoding apparatus 200'.

Definitions of various terms, such as a coding unit, a depth, a prediction unit, a transformation unit, and various split information, for decoding operations of the video decoding apparatus 200 according to an embodiment are identical to those described with reference to FIG. 7 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each largest coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts a final depth and split information for the coding units having a tree structure according to each largest coding unit, from the parsed bitstream. The extracted final depth and split information are output to the image data decoder 230. That is, the image data in a bit stream is split into the largest coding unit so that the image data decoder 230 decodes the image data for each largest coding unit.

A depth and split information according to the largest coding unit may be set for at least one piece of depth information, and split information may include information about a partition mode of a corresponding coding unit, about a prediction mode, and about split of a transformation unit. Also, split information according to depths may be extracted as the information about a depth.

The depth and the split information according to each largest coding unit extracted by the image data and encoding information extractor 220 is a depth and split information determined to generate a minimum encoding error when an encoder, such as the video encoding apparatus 100 according to an embodiment, repeatedly performs encoding for each deeper coding unit according to depths according to each largest coding unit. Accordingly, the video decoding apparatus 200 may reconstruct an image by decoding the image data according to a coded depth and an encoding mode that generates the minimum encoding error.

Since encoding information according to an embodiment about a depth and an encoding mode may be assigned to a predetermined data unit from among a corresponding coding unit, a prediction unit, and a minimum unit, the image data and encoding information extractor 220 may extract the depth and the split information according to the predetermined data units. If the depth and the split information of a corresponding largest coding unit is recorded according to predetermined data units, the predetermined data units to which the same depth and the same split information is assigned may be inferred to be the data units included in the same largest coding unit.

The image data decoder 230 may reconstruct the current picture by decoding the image data in each largest coding unit based on the depth and the split information according to the largest coding units. In other words, the image data decoder 230 may decode the encoded image data based on the extracted information about the partition mode, the prediction mode, and the transformation unit for each coding unit from among the coding units having the tree structure included in each largest coding unit. A decoding process may include a prediction including intra prediction and motion compensation, and an inverse transformation.

The image data decoder 230 may perform intra prediction or motion compensation according to a partition and a prediction mode of each coding unit, based on the information about the partition mode and the prediction mode of the prediction unit of the coding unit according to depths.

In addition, the image data decoder 230 may read information about a transformation unit according to a tree structure for each coding unit so as to perform inverse transformation based on transformation units for each coding unit, for inverse transformation for each largest coding unit. Via the inverse transformation, a pixel value of a spatial region of the coding unit may be reconstructed.

The image data decoder 230 may determine a depth of a current largest coding unit by using split information according to depths. If the split information indicates that image data is no longer split in the current depth, the current depth is a depth. Accordingly, the image data decoder 230 may decode encoded data in the current largest coding unit by using the information about the partition mode of the prediction unit, the prediction mode, and the size of the transformation unit.

That is, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The video decoding apparatus 30 described above with reference to FIG. 3A may include video decoding apparatuses 200 as much as the number of viewpoints, so as to reconstruct first layer images and second layer images by decoding a received first layer image stream and a received second layer image stream.

When the first layer image stream is received, the image data decoder 230 of the video decoding apparatus 200 may split samples of first layer images extracted from the first layer image stream by the image data and encoding information extractor 220 into coding units having a tree structure. The image data decoder 230 may reconstruct the first layer images by performing motion compensation according to prediction units for inter prediction, on the coding units having the tree structure obtained by splitting the samples of the first layer images.

When the second layer image stream is received, the image data decoder 230 of the video decoding apparatus 200 may split samples of second layer images extracted from the second layer image stream by the image data and encoding information extractor 220 into coding units having a tree structure. The image data decoder 230 may reconstruct the second layer images by performing motion compensation according to prediction units for inter prediction, on the coding units obtained by splitting the samples of the second layer images.

The extractor 220 may obtain information related to a luminance error from a bitstream so as to compensate for a luminance difference between a first layer image and a second layer image. However, whether to perform luminance may be determined according to an encoding mode of a coding unit. For example, luminance compensation may be performed only on a prediction unit having a size of 2Nx2N.

Thus, the video decoding apparatus 200 may obtain information about at least one coding unit that generates the minimum encoding error when encoding is recursively performed for each largest coding unit, and may use the information to decode the current picture. In other words, the coding units having the tree structure determined to be the optimum coding units in each largest coding unit may be decoded.

Accordingly, even if an image has high resolution or has an excessively large data amount, the image may be efficiently decoded and reconstructed by using a size of a coding unit and an encoding mode, which are adaptively determined according to characteristics of the image, by using optimum split information received from an encoder.

FIG. 9 is a diagram for describing a concept of coding units according to various embodiments.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

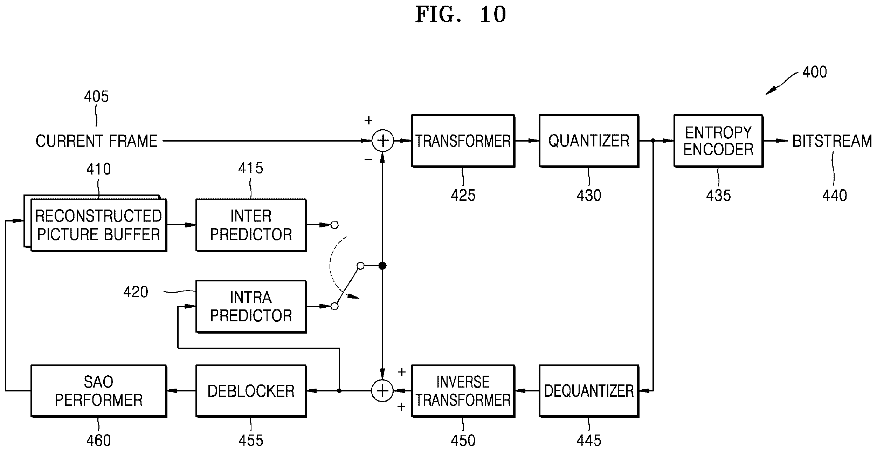

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 10 denotes a total number of splits from a largest coding unit to a smallest coding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a largest coding unit having a long axis size of 64, and coding units having long axis sizes of 32 and 16 since depths are deepened to two layers by splitting the largest coding unit twice. Since the maximum depth of the video data 330 is 1, coding units 335 of the video data 330 may include a largest coding unit having a long axis size of 16, and coding units having a long axis size of 8 since depths are deepened to one layer by splitting the largest coding unit once.

Since the maximum depth of the video data 320 is 3, coding units 325 of the video data 320 may include a largest coding unit having a long axis size of 64, and coding units having long axis sizes of 32, 16, and 8 since the depths are deepened to 3 layers by splitting the largest coding unit three times. As a depth deepens, detailed information may be precisely expressed.

FIG. 10 is a block diagram of an image encoder 400 based on coding units, according to various embodiments.

The image encoder 400 according to an embodiment performs operations of the coding unit determiner 120 of the video encoding apparatus 100 to encode image data. That is, an intra predictor 420 performs intra prediction on coding units in an intra mode, from among a current frame 405, per prediction unit, and an inter predictor 415 performs inter prediction on coding units in an inter mode by using the current image 405 and a reference image obtained by a reconstructed picture buffer 410, per prediction unit. The current picture 405 may be split into largest coding units, and then the largest coding units may be sequentially encoded. Here, the encoding may be performed on coding units split in a tree structure from the largest coding unit.

Residual data is generated by subtracting prediction data of a coding unit of each mode output from the intra predictor 420 or the inter predictor 415 from data of the current image 405 to be encoded, and the residual data is output as a quantized transformation coefficient through a transformer 425 and a quantizer 430 per transformation unit. The quantized transformation coefficient is reconstructed to residual data in a spatial domain through an inverse quantizer 445 and an inverse transformer 450. The residual data in the spatial domain is added to the prediction data of the coding unit of each mode output from the intra predictor 420 or the inter predictor 415 to be reconstructed as data in a spatial domain of the coding unit of the current image 405. The data in the spatial domain passes through a deblocking unit 455 and a sample adaptive offset (SAO) performer 460 and thus a reconstructed image is generated. The reconstructed image is stored in the reconstructed picture buffer 410. Reconstructed images stored in the reconstructed picture buffer 410 may be used as a reference image for inter prediction of another image. The quantized transformation coefficient obtained through the transformer 425 and the quantizer 430 may be output as a bitstream 440 through an entropy encoder 435.

In order for the image encoder 400 according to an embodiment to be applied in the video encoding apparatus 100, components of the image encoder 400, i.e., the inter predictor 415, the intra predictor 420, the transformer 425, the quantizer 430, the entropy encoder 435, the inverse quantizer 445, the inverse transformer 450, the deblocking unit 455, and the SAO performer 460 perform operations based on each coding unit among coding units having a tree structure per largest coding unit.

In particular, the intra predictor 420 and the inter predictor 415 may determine partitions and a prediction mode of each coding unit from among the coding units having a tree structure while considering the maximum size and the maximum depth of a current largest coding unit, and the transformer 425 may determine whether to split a transformation unit according to a quad-tree in each coding unit from among the coding units having the tree structure.

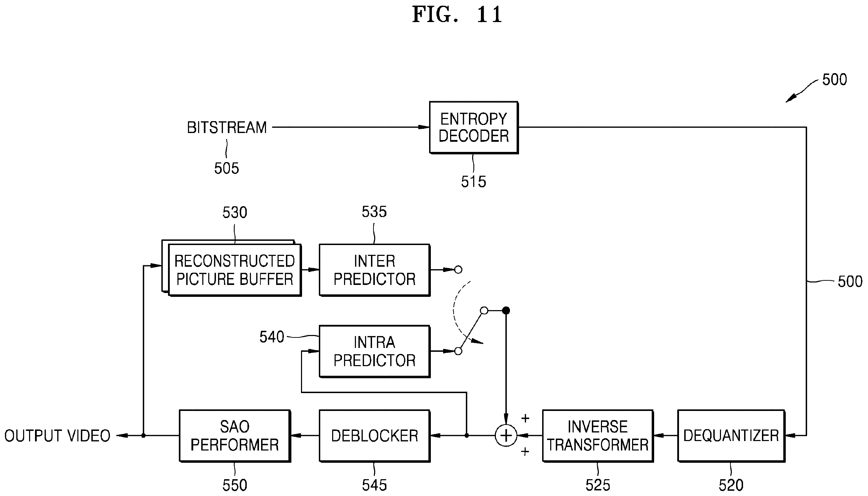

FIG. 11 is a block diagram of an image decoder 500 based on coding units according to various embodiments.

An entropy decoder 515 parses encoded image data that is to be decoded and encoding information required for decoding from a bitstream 505. The encoded image data is a quantized transformation coefficient, and an inverse quantizer 520 and an inverse transformer 525 reconstructs residual data from the quantized transformation coefficient.

An intra predictor 540 performs intra prediction on a coding unit in an intra mode according to prediction units. An inter predictor performs inter prediction on a coding unit in an inter mode from a current image according to prediction units, by using a reference image obtained by a reconstructed picture buffer 530.

Data in a spatial domain of coding units of the current image is reconstructed by adding the residual data and the prediction data of a coding unit of each mode through the intra predictor 540 or the inter predictor 535, and the data in the spatial domain may be output as a reconstructed image through a deblocking unit 545 and an SAO performer 550. Also, reconstructed images that are stored in the reconstructed picture buffer 530 may be output as reference images.

In order to decode the image data in the image data decoder 230 of the video decoding apparatus 200, operations after the entropy decoder 515 of the image decoder 500 according to an embodiment may be performed.

In order for the image decoder 500 to be applied in the video decoding apparatus 200 according to an embodiment, components of the image decoder 500, i.e., the entropy decoder 515, the inverse quantizer 520, the inverse transformer 525, the intra predictor 540, the inter predictor 535, the deblocking unit 545, and the SAO performer 550 may perform operations based on coding units having a tree structure for each largest coding unit.

In particular, the intra prediction 540 and the inter predictor 535 determine a partition mode and a prediction mode according to each of coding units having a tree structure, and the inverse transformer 525 may determine whether to split a transformation unit according to a quad-tree structure per coding unit.

An encoding operation of FIG. 10 and a decoding operation of FIG. 10 are respectively a video stream encoding operation and a video stream decoding operation in a single layer. Accordingly, when the video encoding apparatus 40 of FIG. 4A encodes a video stream of at least two layers, the video encoding apparatus 40 may include as many image encoder 400 as the number of layers. Similarly, when the video decoding apparatus 30 of FIG. 3A decodes a video stream of at least two layers, the video decoding apparatus 30 may include as many image decoders 500 as the number of layers.

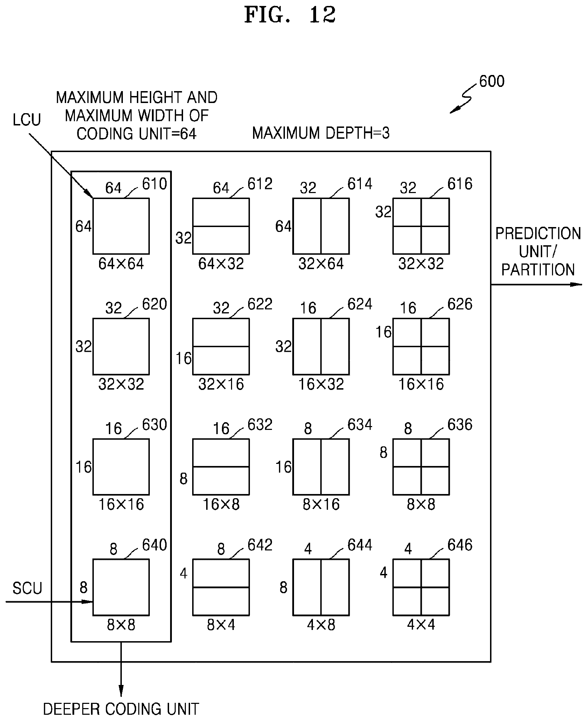

FIG. 12 is a diagram illustrating coding units according to depths and partitions, according to various embodiments.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be variously set according to user requirements. Sizes of deeper coding units according to depths may be determined according to the predetermined maximum size of the coding unit.

In a hierarchical structure 600 of coding units according to an embodiment, the maximum height and the maximum width of the coding units are each 64, and the maximum depth is 3. In this case, the maximum depth refers to a total number of times the coding unit is split from the largest coding unit to the smallest coding unit. Since a depth deepens along a vertical axis of the hierarchical structure 600 of coding units according to an embodiment, a height and a width of the deeper coding unit are each split. Also, a prediction unit and partitions, which are bases for prediction encoding of each deeper coding unit, are shown along a horizontal axis of the hierarchical structure 600.

That is, a coding unit 610 is a largest coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having a size of 8x8 and a depth of 3 is a smallest coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions included in the coding unit 610 having a size of 64x64, i.e. a partition 610 having a size of 64x64, partitions 612 having the size of 64x32, partitions 614 having the size of 32x64, or partitions 616 having the size of 32x32.

Equally, a prediction unit of the coding unit 620 having the size of 32x32 and the depth of 1 may be split into partitions included in the coding unit 620 having a size of 32x32, i.e. a partition 620 having a size of 32x32, partitions 622 having a size of 32x16, partitions 624 having a size of 16x32, and partitions 626 having a size of 16x16.

Equally, a prediction unit of the coding unit 630 having the size of 16x16 and the depth of 2 may be split into partitions included in the coding unit 630 having a size of 16x16, i.e. a partition having a size of 16x16 included in the coding unit 630, partitions 632 having a size of 16x8, partitions 634 having a size of 8x16, and partitions 636 having a size of 8x8.

Equally, a prediction unit of the coding unit 640 having the size of 8x8 and the depth of 3 may be split into partitions included in the coding unit 640 having a size of 8x8, i.e. a partition 640 having a size of 8x8 included in the coding unit 640, partitions 642 having a size of 8x4, partitions 644 having a size of 4x8, and partitions 646 having a size of 4x4.

In order to determine the depth of the largest coding unit 610, the coding unit determiner 120 of the video encoding apparatus 100 according to an embodiment performs encoding for coding units corresponding to each depth included in the maximum coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 have to be each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the largest coding unit 610 may be selected as the depth and a partition mode of the largest coding unit 610.

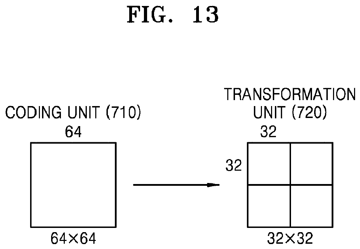

FIG. 13 is a diagram for describing a relationship between a coding unit and transformation units, according to various embodiments.

The video encoding apparatus 100 according to an embodiment or the video decoding apparatus 200 according to an embodiment encodes or decodes an image according to coding units having sizes less than or equal to a largest coding unit for each largest coding unit. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of a coding unit 710 is 64x64, transformation may be performed by using a transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

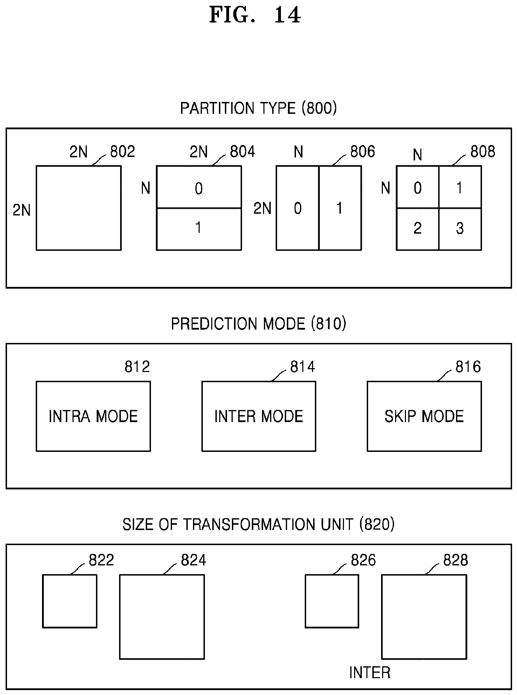

FIG. 14 illustrates a plurality of pieces of encoding information according to depths, according to various embodiments.

The output unit 130 of the video encoding apparatus 100 according to an embodiment may encode and transmit information 800 about a partition mode, information 810 about a prediction mode, and information 820 about a size of a transformation unit for each coding unit corresponding to a depth, as split information.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 according to an embodiment may extract and use the information 800, 810, and 820 for decoding, according to each deeper coding unit.

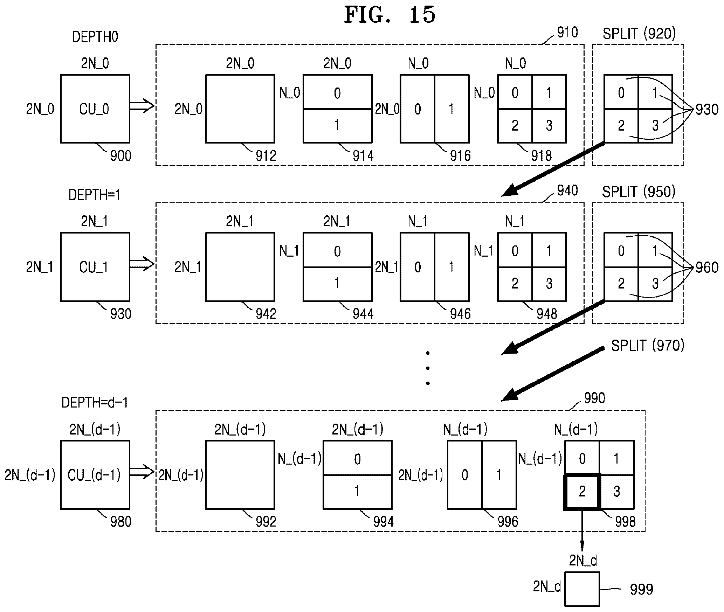

FIG. 15 is a diagram of deeper coding units according to depths, according to various embodiments.

Split information may be used to indicate a change of a depth. The spilt information indicates whether a coding unit of a current depth is split into coding units of a lower depth.

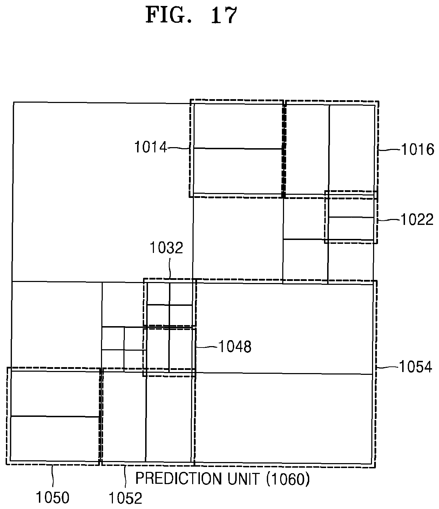

A prediction unit 910 for prediction encoding a coding unit 900 having a depth of 0 and a size of 2N_0x2N_0 may include partitions of a partition mode 912 having a size of 2N_Ox2N_0, a partition mode 914 having a size of 2N_0xN_0, a partition mode 916 having a size of N_0x2N_0, and a partition mode 918 having a size of N_0xN_0. FIG. 17 only illustrates the partitions 912, 914, 916, and 918 which are obtained by symmetrically splitting the prediction unit, but a partition mode is not limited thereto, and the partitions of the prediction unit may include asymmetrical partitions, partitions having a predetermined shape, and partitions having a geometrical shape.

Prediction encoding is repeatedly performed on one partition having a size of 2N_Ox2N_0, two partitions having a size of 2N_0xN_0, two partitions having a size of N_0x2N_0, and four partitions having a size of N_0xN_0, according to each partition mode. The prediction encoding in an intra mode and an inter mode may be performed on the partitions having the sizes of 2N_Ox2N_0, N_0x2N_0, 2N_0xN_0, and N_0xN_0. The prediction encoding in a skip mode is performed only on the partition having the size of 2N_0x2N_0.

If an encoding error is smallest in one of the partition modes 912, 914, and 916, the prediction unit 910 may not be split into a lower depth.

If the encoding error is the smallest in the partition mode 918, a depth is changed from 0 to 1 to split the partition mode 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition mode 942 having a size of 2N_1x2N_1, a partition mode 944 having a size of 2N_1xN_1, a partition mode 946 having a size of N_1x2N_1, and a partition mode 948 having a size of N_1xN_1.

If an encoding error is the smallest in the partition mode 948, a depth is changed from 1 to 2 to split the partition mode 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition mode 992 having a size of 2N_(d-1)x2N_(d-1), a partition mode 994 having a size of 2N_(d-1)xN_(d-1), a partition mode 996 having a size of N_(d-1)x2N_(d-1), and a partition mode 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition modes to search for a partition mode having a minimum encoding error.

Even when the partition mode 998 has the minimum encoding error, since a maximum depth is d, a coding unit CU_(d-1) having a depth of d-1 is no longer split to a lower depth, and a depth for the coding units constituting a current largest coding unit 900 is determined to be d-1 and a partition mode of the current largest coding unit 900 may be determined to be N_(d-1)xN_(d-1). Also, since the maximum depth is d, split information for a coding unit 952 having a depth of d-1 is not set.

A data unit 999 may be a 'minimum unit' for the current largest coding unit. A minimum unit according to an embodiment may be a square data unit obtained by splitting a smallest coding unit having a lowermost depth by 4. By performing the encoding repeatedly, the video encoding apparatus 100 according to an embodiment may select a depth having the least encoding error by comparing encoding errors according to depths of the coding unit 900 to determine a depth, and set a corresponding partition mode and a prediction mode as an encoding mode of the depth.

As such, the minimum encoding errors according to depths are compared in all of the depths of 1 through d, and a depth having the least encoding error may be determined as a d depth. The depth, the partition mode of the prediction unit, and the prediction mode may be encoded and transmitted as split information. Also, since a coding unit is split from a depth of 0 to a depth, only split information of the depth is set to 0, and split information of depths excluding the depth is set to 1.

The image data and encoding information extractor 220 of the video decoding apparatus 200 according to an embodiment may extract and use the information about the depth and the prediction unit of the coding unit 900 to decode the partition 912. The video decoding apparatus 200 according to an embodiment may determine a depth, in which split information is 0, as a depth by using split information according to depths, and use split information of the corresponding depth for decoding.

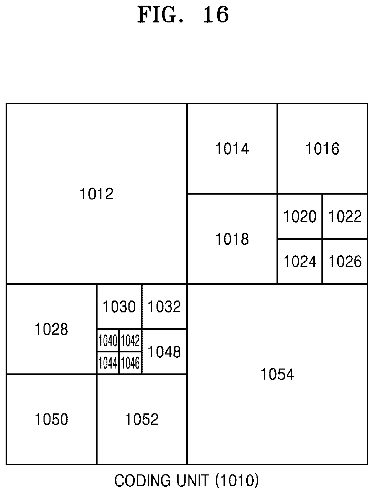

FIGS. 16, 17, and 18 are diagrams for describing a relationship between coding units, prediction units, and transformation units, according to various embodiments.

Coding units 1010 are coding units having a tree structure, according to depths determined by the video encoding apparatus 100 according to an embodiment, in a largest coding unit. Prediction units 1060 are partitions of prediction units of each of coding units according to depths, and transformation units 1070 are transformation units of each of coding units according to depths.

When a depth of a largest coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some coding units 1014, 1016, 1022, 1032, 1048, 1050, 1052, and 1054 are obtained by splitting the coding units in the coding units 1010. In other words, partition modes in the coding units 1014, 1022, 1050, and 1054 have a size of 2NxN, partition modes in the coding units 1016, 1048, and 1052 have a size of Nx2N, and a partition modes of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, 1052, and 1054 in the transformation units 1070 are data units different from those in the prediction units 1060 in terms of sizes and shapes. That is, the video encoding and decoding apparatuses 100 and 200 according to an embodiment may perform intra prediction, motion estimation, motion compensation, transformation, and inverse transformation on an individual data unit in the same coding unit.

Accordingly, encoding is recursively performed on each of coding units having a hierarchical structure in each region of a largest coding unit to determine an optimum coding unit, and thus coding units having a recursive tree structure may be obtained. Encoding information may include split information about a coding unit, information about a partition mode, information about a prediction mode, and information about a size of a transformation unit. Table 1 shows the encoding information that may be set by the video encoding and decoding apparatuses 100 and 200 according to embodiments.

[Table 1]

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| | Symmetrical Partition Type | Asymmetrical Partition Type | Split Information 0 of Transformation Unit | Split Information 1 of Transformation Unit | |
| Intra Inter<br><br>Skip (Only 2Nx2N) | 2Nx2N<br><br>2NxN<br><br>Nx2N<br><br>NxN | 2NxnU<br><br>2NxnD<br><br>nLx2N<br><br>nRx2N | 2Nx2N | NxN<br><br>(Symmetrical Type)<br><br><br><br>N/2xN/2<br><br>(Asymmetrical Type) | Repeatedly Encode Coding Units having Lower Depth of d+1 |

The output unit 130 of the video encoding apparatus 100 according to an embodiment may output the encoding information about the coding units having a tree structure, and the image data and encoding information extractor 220 of the video decoding apparatus 200 according to an embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a depth, and thus information about a partition mode, prediction mode, and a size of a transformation unit may be defined for the depth. If the current coding unit has to be further split according to the split information, encoding has to be independently performed on four split coding units of a lower depth.

A prediction mode may be one of an intra mode, an inter mode, and a skip mode. The intra mode and the inter mode may be defined in all partition modes, and the skip mode is defined only in a partition mode having a size of 2Nx2N.

The information about the partition mode may indicate symmetrical partition modes having sizes of 2Nx2N, 2NxN, Nx2N, and NxN, which are obtained by symmetrically splitting a height or a width of a prediction unit, and asymmetrical partition modes having sizes of 2NxnU, 2NxnD, nLx2N, and nRx2N, which are obtained by asymmetrically splitting the height or width of the prediction unit. The asymmetrical partition modes having the sizes of 2NxnU and 2NxnD may be respectively obtained by splitting the height of the prediction unit in 1:3 and 3:1, and the asymmetrical partition modes having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition mode of the current coding unit having the size of 2Nx2N is a symmetrical partition mode, a size of a transformation unit may be NxN, and if the partition type of the current coding unit is an asymmetrical partition mode, the size of the transformation unit may be N/2xN/2.

The encoding information about coding units having a tree structure, according to an embodiment, may include at least one of a coding unit corresponding to a depth, a prediction unit, and a minimum unit. The coding unit corresponding to the depth may include at least one of a prediction unit and a minimum unit containing the same encoding information.

Accordingly, it is determined whether adjacent data units are included in the same coding unit corresponding to the depth by comparing encoding information of the adjacent data units. Also, a corresponding coding unit corresponding to a depth is determined by using encoding information of a data unit, and thus a distribution of depths in a largest coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred to for predicting the current coding unit.

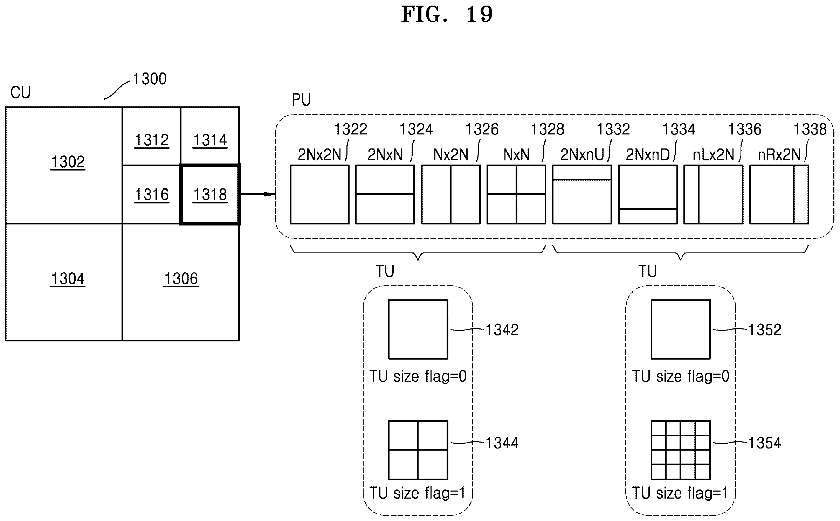

FIG. 19 is a diagram for describing a relationship between a coding unit, a prediction unit, and a transformation unit, according to encoding mode information of Table 1.

A largest coding unit 1300 includes coding units 1302, 1304, 1306, 1312, 1314, 1316, and 1318 of depths. Here, since the coding unit 1318 is a coding unit of a depth, split information may be set to 0. Information about a partition mode of the coding unit 1318 having a size of 2Nx2N may be set to be one of a partition mode 1322 having a size of 2Nx2N, a partition mode 1324 having a size of 2NxN, a partition mode 1326 having a size of Nx2N, a partition mode 1328 having a size of NxN, a partition mode 1332 having a size of 2NxnU, a partition mode 1334 having a size of 2NxnD, a partition mode 1336 having a size of nLx2N, and a partition mode 1338 having a size of nRx2N.

Split information (TU size flag) of a transformation unit is a type of a transformation index. The size of the transformation unit corresponding to the transformation index may be changed according to a prediction unit type or partition mode of the coding unit.

For example, when the partition mode is set to be symmetrical, i.e. the partition mode 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition mode is set to be asymmetrical, i.e., the partition mode 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 19, the TU size flag is a flag having a value or 0 or 1, but the TU size flag according to an embodiment is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment, together with a maximum size and minimum size of the transformation unit. The video encoding apparatus 100 according to an embodiment is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 according to an embodiment may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$

$$= \max(\text{MinTransformSize}, \text{RootTuSize}/(2^{\wedge}\text{MaxTransformSizeIndex})) \ldots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) \dots\dots\dots (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) \dots\dots\dots(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present disclosure is not limited thereto.

According to the video encoding method based on coding units having a tree structure as described with reference to FIGS. 7 through 19, image data of a spatial region is encoded for each coding unit of a tree structure. According to the video decoding method based on coding units having a tree structure, decoding is performed for each largest coding unit to reconstruct image data of a spatial region. Thus, a picture and a video that is a picture sequence may be reconstructed. The reconstructed video may be reproduced by a reproducing apparatus, stored in a storage medium, or transmitted through a network.

The embodiments according to the present disclosure may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g..CD-ROMs, or DVDs).

For convenience of description, the image encoding method and/or the video encoding method described above with reference to FIGS. 1 through 19 will be collectively referred to as the 'video encoding method'. In addition, the image decoding method and/or the video decoding method described above with reference to FIGS. 1 through 19 will be referred to as a 'video decoding method'.

The video encoding apparatus 40, or the video encoding apparatus 100, which has been described with reference to FIGS. 1 through 19, will be referred to as a 'video encoding apparatus'. In addition, a video decoding apparatus including the video decoding apparatus 30, the video decoding apparatus 200, or the image decoder 500, which has been descried with reference to FIGS. 1 through 19, will be collectively referred to as a 'video decoding apparatus'.

A computer-readable recording medium storing a program, e.g., a disc 26000, according to an embodiment will now be described in detail.

FIG. 20 is a diagram of a physical structure of the disc 26000 in which a program according to various embodiments is stored. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000 according to the embodiment, a program that executes the quantization parameter determining method, the video encoding method, and the video decoding method described above may be assigned and stored.

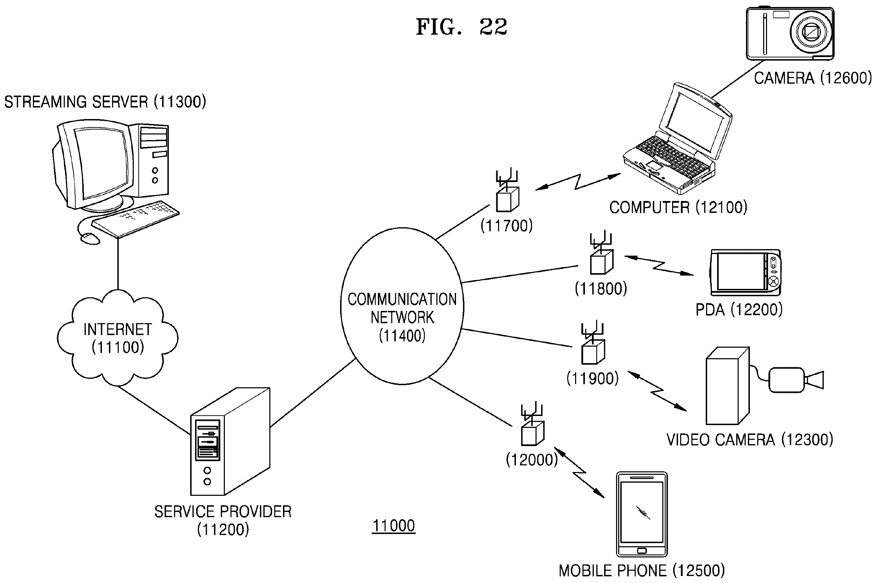

A computer system embodied using a storage medium that stores a program for executing the video encoding method and the video decoding method as described above will now be described with reference to FIG. 22.

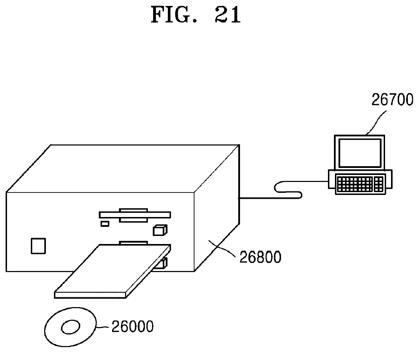

FIG. 21 is a diagram of a disc drive 26800 for recording and reading a program by using the disc 26000. A computer system 27000 may store a program that executes at least one of the video encoding method and the video decoding method of the present disclosure, in the disc 26000 via the disc drive 26800. To run the program stored in the disc 26000 in the computer system 27000, the program may be read from the disc 26000 and be transmitted to the computer system 26700 by using the disc drive 27000.

The program that executes at least one of a video encoding method and a video decoding method of the present disclosure may be stored not only in the disc 26000 illustrated in FIG. 20 and 21 but also in a memory card, a ROM cassette, or a solid state drive (SSD).

A system to which the video encoding method and the video decoding method described above are applied will be described below.

FIG. 22 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to the structure as illustrated in FIG. 22, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded by the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 according to an embodiment may encode content data recorded by a user using the video camera 12300, the camera 12600, the mobile phone 12500, or another imaging device, e.g., content recorded during a concert, and may transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and to decode and reproduce the encoded content data in real-time, thereby enabling personal broadcasting.

The video encoding apparatus and the video decoding apparatus according to the embodiments may be applied to encoding and decoding operations of the plurality of independent devices included in the content supply system 11000.

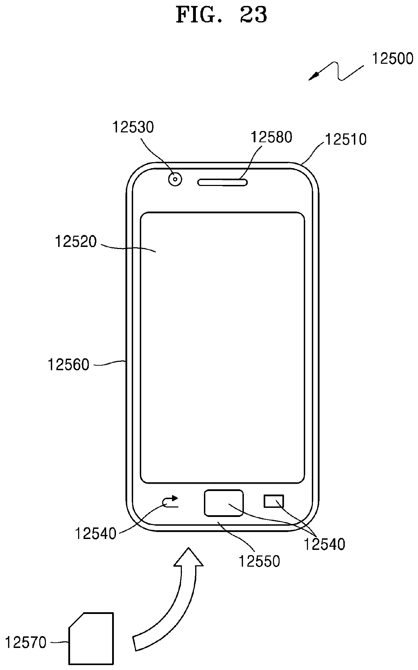

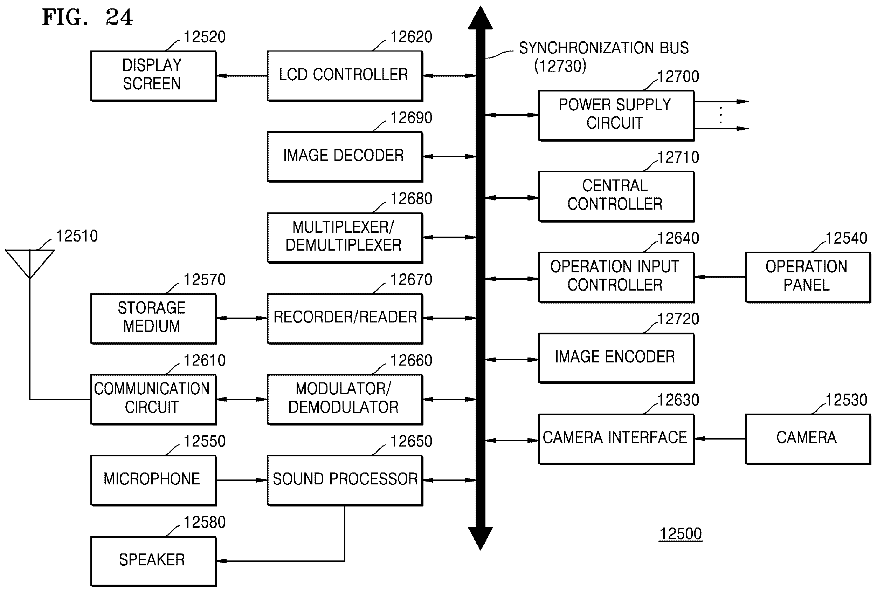

The mobile phone 12500 included in the content supply system 11000 according to an embodiment will now be described in greater detail with referring to FIGS. 23 and 24.

FIG. 23 illustrates an external structure of the mobile phone 12500 to which the video encoding method and the video decoding method according to various embodiments are applied. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 24 illustrates an internal structure of the mobile phone 12500. To systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a 'power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the video encoding apparatus described above. The image encoder 12720 may transform the image data received from the camera 12530 into compressed and encoded image data according to the video encoding method described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoder 12690 may correspond to that of the video decoding apparatus described above. The image decoder 12690 may decode the encoded video data to obtain reconstructed video data and provide the reconstructed video data to the display screen 12520 via the LCD controller 12620, by using the aforementioned video decoding method.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both the video encoding apparatus and the video decoding apparatus, may be a transceiving terminal including only the video encoding apparatus of the present disclosure, or may be a transceiving terminal including only the video decoding apparatus.

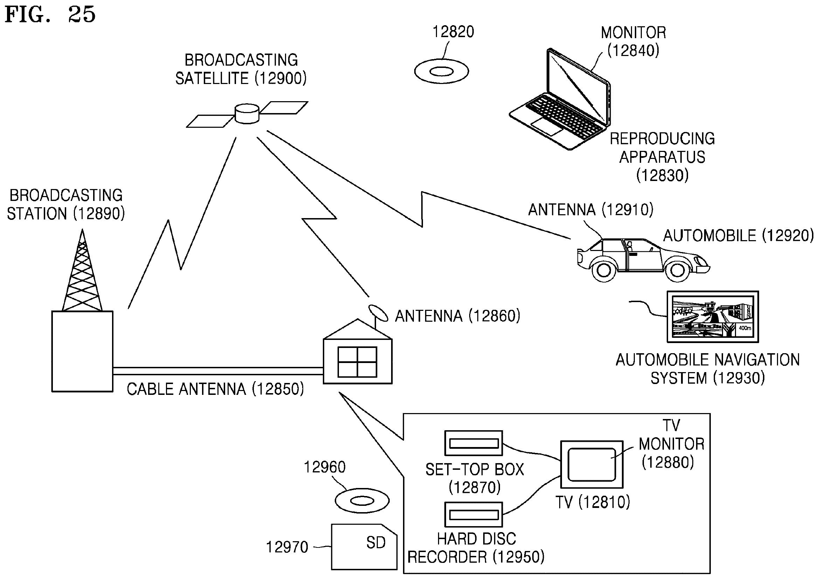

A communication system according to an embodiment is not limited to the communication system described above with reference to FIG.24. For example, FIG. 25 illustrates a digital broadcasting system employing a communication system, according to various embodiments. The digital broadcasting system of FIG. 25 according to various embodiments may receive a digital broadcast transmitted via a satellite or a terrestrial network by using the video encoding apparatus and the video decoding apparatus of the present disclosure.

In more detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus may be installed. Data output from the set-top box 12870 may also be reproduced on a TV monitor 12880.

As another example, the video decoding apparatus according to an embodiment may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by the video encoding apparatus according to an embodiment and may then be recorded to and stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus according to an embodiment, a video signal recorded on the DVD disc 12960, the SD card 12970, or another storage medium may be reproduced on the TV monitor 12880.

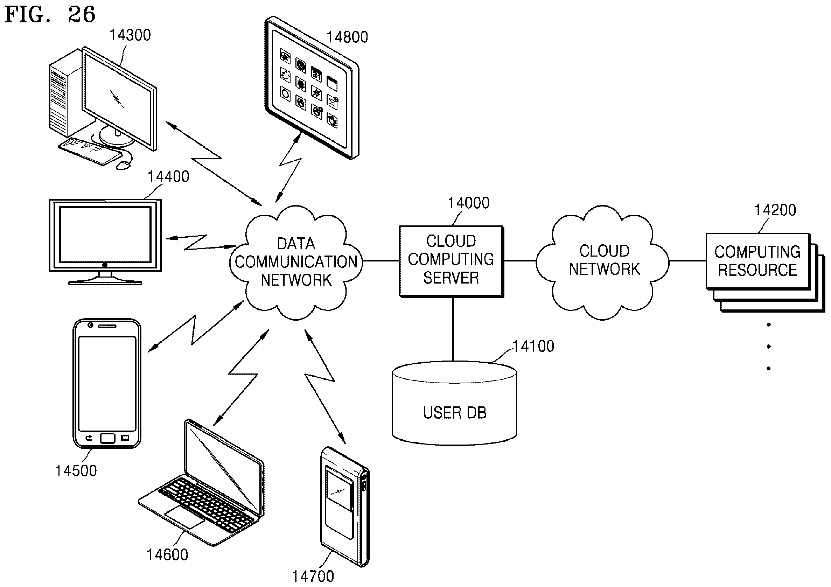

The automobile navigation system 12930 may not include the camera 12530, the camera interface 12630, and the image encoder 12720 of FIG. 26. For example, the computer 12100 and the TV receiver 12810 may not include the camera 12530, the camera interface 12630, and the image encoder 12720 of FIG. 26.

FIG. 26 is a diagram illustrating a network structure of a cloud computing system using a video encoding apparatus and a video decoding apparatus, according to various embodiments.

The cloud computing system according to an embodiment may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include the video decoding apparatus as described above with reference to FIGS. 1 through 19. As another example, the user terminal may include the video encoding apparatus as described above with reference to FIGS. 1 through 19. Alternatively, the user terminal may include both the video decoding apparatus and the video encoding apparatus as described above with reference to FIGS. 1 through 19.

Various applications of a video encoding method, a video decoding method, a video encoding apparatus, and a video decoding apparatus according to various embodiments described above with reference to FIGS. 1 through 19 have been described above with reference to FIGS. 20 through 26. However, methods of storing the video encoding method and the video decoding method in a storage medium or methods of implementing the video encoding apparatus and the video decoding apparatus in a device, according to various embodiments, are not limited to the embodiments described above with reference to FIGS. 20 through 26.

It will be understood by one of ordinary skill in the art that various changes in form and details may be made therein without departing from the spirit and scope of the present disclosure as defined by the appended claims. The embodiments should be considered in a descriptive sense only and not for purposes of limitation. Therefore, the scope of the present disclosure is defined not by the detailed description of the present disclosure but by the appended claims, and all differences within the scope will be construed as being included in the present disclosure.

**Claims**

1.  A video decoding method comprising:

    obtaining a residual signal of a block of an image from a bitstream;
    determining at least one partition of the block of the image, based on of a maskmap which is division information of the block;
    performing filtering at a boundary of the at least one partition; and
    generating a reconstructed signal based on a result of performing the filtering,
    wherein the filtering is performed using at least one of the residual signal and a predicted signal corresponding to the residual signal.

**2.** The video decoding method of claim 1, wherein, when the image is a color image or a depth image, the maskmap corresponding to the image is related to a shape in which either a block of the depth image or a block of the color image is divided.

**3.** The video decoding method of claim 1, wherein the maskmap is divided into a region with samples each having a value which is greater than an average value of a plurality of samples of the block and a region with samples each having a value which is not greater than the average value.

**4.** The video decoding method of claim 1, wherein the performing of the filtering comprises performing filtering based on a filtering coefficient,
wherein the filtering coefficient is adaptively set according to characteristics of the image.

**5.** The video decoding method of claim 1, wherein the performing of the filtering comprises performing horizontal-direction filtering when the block is divided into a plurality of partitions by a vertical boundary, and performing vertical-direction filtering when the block is divided into a plurality of partitions by a horizontal boundary.

**6.** The video decoding method of claim 1, wherein, when the block is divided into a plurality of partitions by a boundary including a vertical boundary and a horizontal boundary, the performing of the filtering comprises performing at least one of horizontal-direction filtering and vertical-direction filtering on a sample adjacent to the vertical boundary and the horizontal boundary.

**7.** The video decoding method of claim 1, wherein the performing of the filtering comprises:

detecting, from the maskmap, a plurality of samples corresponding to a position of a sample of the image to be filtered;
comparing the plurality of detected samples with one another; and
when a result of comparing the plurality of detected samples with one another reveals that the plurality of detected samples are different from one another, filtering a sample of the image corresponding to positions of the plurality of detected samples.

**8.** The video decoding method of claim 1, when the maskmap and the block are different in size, further comprising performing scaling to change the size of the maskmap to be the same as the size of the block.

**9.** A video encoding method comprising:

obtaining an original signal of a block of an image;
determining at least one partition of the block of the image, based on a maskmap which is division information of the block;
performing filtering at a boundary between the at least one partition; and
generating a filtered residual signal based on a result of performing the filtering,
wherein the filtering is performed using at least one among the original signal, a predicted signal corresponding to the original signal, and a residual signal related to the original signal and the predicted signal.

**10.** The video encoding method of claim 9, wherein the maskmap is obtained based on a shape in which a block of a depth image or a block of a color image is divided.

**11.** The video encoding method of claim 9, wherein the maskmap is divided into a region with samples each having a value which is greater than an average value of a plurality of samples of the block and a region with samples each having a value which is not greater than the average value.

**12.** The video encoding method of claim 9, wherein the performing of the filtering comprises performing filtering based on a filtering coefficient,
wherein the filtering coefficient is adaptively set according to characteristics of the image.

**13.** The video encoding method of claim 9, wherein the performing of the filtering comprises performing horizontal-direction filtering when the block is divided into a plurality of partitions by a vertical boundary, and performing vertical-direction filtering when the block is divided into a plurality of partitions by a horizontal boundary.

14. The video encoding method of claim 13, wherein, when the block is divided into a plurality of partitions by a boundary including a vertical boundary and a horizontal boundary, the performing of the filtering comprises performing at least one of horizontal-direction filtering and vertical-direction filtering on a sample adjacent to the vertical boundary and the horizontal boundary.

15. The video encoding method of claim 9, wherein the performing of the filtering comprises:

detecting, from the maskmap, a plurality of samples corresponding to a position of a sample of the image to be filtered;
comparing the plurality of detected samples with one another; and
when a result of comparing the plurality of detected samples with one another reveals that the plurality of detected samples are different from one another, filtering a sample of the image corresponding to positions of the plurality of detected samples.

16. The video encoding method of claim 9, when the maskmap and the block are different in size, further comprising performing scaling to change the size of the maskmap to be the same as the size of the block.

17. A video decoding apparatus comprising:

a residual signal obtainer configured to obtain a residual signal related to a block of an image from a bitstream;
a partition determiner configured to determine at least one partition of the block of the image;
a filtering unit configured to perform filtering at a boundary of the at least one partition; and
a decoder configured to generate a reconstructed signal, based on at least one of a filtered predicted signal and a filtered residual signal.

18. A video encoding apparatus comprising:

a partition determiner configured to determine at least one partition of a block of an image;
a filtering unit configured to perform filtering at a boundary of the at least one partition; and
an encoder configured to generate a filtered residual signal, based on at least one among a filtered original signal, a filtered predicted signal, and a filtered residual signal.

19. A non-transitory computer-readable recording medium having recorded thereon a program for performing the video decoding method of any one of claims 1 to 8.

20. A non-transitory computer-readable recording medium having recorded thereon a program for performing the video encoding method of any one of claims 9 to 16.

FIG. 1

FIG. 2

FIG. 3A

# FIG. 3B

START

DETERMINE AT LEAST ONE PARTITION OF BLOCK
OF IMAGE ON THE BASIS OF MASKMAP WHICH
IS BLOCK DIVISION INFORMATION — 301

PERFORM FILTERING AT BOUNDARY
OF AT LEAST ONE PARTITION — 302

GENERATE RECONSTRUCTED SIGNAL ON THE
BASIS OF RESULT OF PERFORMING FILTERING — 303

END

# FIG. 4A

```
                                                          ┌── 40
┌──────────────────────────────────────────────────────────────────┐
│                                                                    │
│         ┌── 42              ┌── 46              ┌── 48              │
│   ┌──────────────┐    ┌──────────────┐    ┌──────────────┐         │
│ ──┤ ORIGINAL-SIGNAL├──►│ FILTERING UNIT├──►│   ENCODER    ├──►      │
│   │   OBTAINER    │    │              │    │              │         │
│   └──────────────┘    └──────────────┘    └──────────────┘         │
│                              ▲                                     │
│                              │   ┌── 44                            │
│                       ┌──────────────┐                            │
│                       │  PARTITION    │                            │
│                       │  DETERMINER   │                            │
│                       └──────────────┘                            │
│                                                                    │
└──────────────────────────────────────────────────────────────────┘
```

# FIG. 4B

START

DETERMINE AT LEAST ONE PARTITION OF
BLOCK OF IMAGE ON THE BASIS OF MASKMAP — 401
WHICH IS BLOCK DIVISION INFORMATION

PERFORM FILTERING AT BOUNDARY OF
AT LEAST ONE PARTITION — 402

GENERATE FILTERED RESIDUAL SIGNAL ON THE
BASIS OF RESULT OF PERFORMING FILTERING — 403

END

## FIG. 5A

FIG. 5B

## FIG. 6

FIG. 7

100

110
LCU
SPLITTER

120
CODING UNIT
DETERMINER

130
OUTPUTTER

# FIG. 8

# FIG. 9

| | | | |
|---|---|---|---|
| 64 | 64 | 32 | 32 |
| 64×64 | 64×32 | 32×64 | 32×32 |
| 32 | 32 | 16 | 16 |
| 32×32 | 32×16 | 16×32 | 16×16 |
| 16 | 16 | 8 | 8 |
| 16×16 | 16×8 | 8×16 | 8×8 |
| 8 | 8 | 4 | 4 |
| 8×8 | 8×4 | 4×8 | 4×4 |

315

RESOLUTION:1920×1080
MAXIMUM SIZE OF
CODING UNIT:64
MAXIMUM DEPTH=2

— 310

RESOLUTION:1920×1080
MAXIMUM SIZE OF
CODING UNIT:64
MAXIMUM DEPTH=3

— 320

RESOLUTION:352×288
MAXIMUM SIZE OF
CODING UNIT:16
MAXIMUM DEPTH=1

— 330

335  325

## FIG. 10

EP 3 119 090 A1

# FIG. 11

EP 3 119 090 A1

# FIG. 12

# FIG. 13

CODING UNIT (710)

TRANSFORMATION
UNIT (720)

64

32

32

64×64

32×32

EP 3 119 090 A1

FIG. 14

PARTITION TYPE (800)

2N  802    2N  804    N  806    N  808

2N □        N  [0]    2N [0|1]   N [0|1]
                 [1]                [2|3]

PREDICTION MODE (810)

812          814          816

INTRA MODE   INTER MODE   SKIP MODE

SIZE OF TRANSFORMATION UNIT (820)

822  824          826  828

INTER

45

## FIG. 15

DEPTH0

2N_0

2N_0 | CU_0 | 2N_0
900

⇒

910 | SPLIT (920)

2N_0 | 2N_0 | N_0 | N_0

2N_0 | | N_0
912

2N_0 | 0 / 1 | 2N_0
914

2N_0 | 0 | 1 | N_0
916

N_0 | 0 1 / 2 3
918

0 1 / 2 3 → 930

DEPTH=1

2N_1

2N_1 | CU_1 | 2N_1
930

⇒

940 | SPLIT (950)

2N_1 | 2N_1 | N_1 | N_1

2N_1 | | N_1
942

2N_1 | 0 / 1 | 2N_1
944

2N_1 | 0 | 1 | N_1
946

N_1 | 0 1 / 2 3
948

0 1 / 2 3 → 960

SPLIT (970)

DEPTH=d-1

2N_(d-1)

2N_(d-1) | CU_(d-1) | 2N_(d-1)
980

⇒

990

2N_(d-1) | 2N_(d-1) | N_(d-1) | N_(d-1)

2N_(d-1) | | N_(d-1)
992

2N_(d-1) | 0 / 1 | 2N_(d-1)
994

2N_(d-1) | 0 | 1 | N_(d-1)
996

N_(d-1) | 0 1 / 2 3
998

2N_d

2N_d | | 
999

EP 3 119 090 A1

46

# FIG. 16

CODING UNIT (1010)

FIG. 17

PREDICTION UNIT (1060)

1014 — 1016 — 1022 — 1032 — 1048 — 1054 — 1050 — 1052

FIG. 18

1014  1016

1022

1032

1048

1054

TRANSFORMATION UNIT (1070)

1050  1052

## FIG. 19

CU      1300

| 1302 | 1312 | 1314 |
|---|---|---|
|  | 1316 | 1318 |
| 1304 | 1306 | |

PU

| 1322 | 1324 | 1326 | 1328 | 1332 | 1334 | 1336 | 1338 |
|---|---|---|---|---|---|---|---|
| 2Nx2N | 2NxN | Nx2N | NxN | 2NxnU | 2NxnD | nLx2N | nRx2N |

TU

TU size flag=0 — 1342

TU size flag=1 — 1344

TU

TU size flag=0 — 1352

TU size flag=1 — 1354

EP 3 119 090 A1

FIG. 20

FIG. 21

**FIG. 22**

STREAMING SERVER (11300)

CAMERA (12600)

COMPUTER (12100)

(11700)

INTERNET (11100)

COMMUNICATION NETWORK (11400)

(11800)

PDA (12200)

(11900)

VIDEO CAMERA (12300)

SERVICE PROVIDER (11200)

11000

(12000)

MOBILE PHONE (12500)

EP 3 119 090 A1

# FIG. 23

12500

12530   12580   12510

12520

12560

12540

12550   12540

12570

**FIG. 24**

DISPLAY SCREEN (12520)

LCD CONTROLLER (12620)

IMAGE DECODER (12690)

MULTIPLEXER/ DEMULTIPLEXER (12680)

STORAGE MEDIUM (12570)

RECORDER/READER (12670)

COMMUNICATION CIRCUIT (12610)

MODULATOR/ DEMODULATOR (12660)

MICROPHONE (12550)

SOUND PROCESSOR (12650)

SPEAKER (12580)

12510

SYNCHRONIZATION BUS (12730)

POWER SUPPLY CIRCUIT (12700)

CENTRAL CONTROLLER (12710)

OPERATION INPUT CONTROLLER (12640)

OPERATION PANEL (12540)

IMAGE ENCODER (12720)

CAMERA INTERFACE (12630)

CAMERA (12530)

12500

EP 3 119 090 A1

**FIG. 25**

BROADCASTING SATELLITE (12900)

12820

MONITOR (12840)

REPRODUCING APPARATUS (12830)

BROADCASTING STATION (12890)

ANTENNA (12910)

AUTOMOBILE (12920)

ANTENNA (12860)

AUTOMOBILE NAVIGATION SYSTEM (12930)

CABLE ANTENNA (12850)

12960

12970

SD

SET-TOP BOX (12870)

HARD DISC RECORDER (12950)

TV MONITOR (12880)

TV (12810)

**FIG. 26**

EP 3 119 090 A1

<table>
<tr><td colspan="2" align="center">INTERNATIONAL SEARCH REPORT</td><td>International application No.</td></tr>
<tr><td colspan="2"></td><td>**PCT/KR2015/002675**</td></tr>
</table>

| A. CLASSIFICATION OF SUBJECT MATTER |
| --- |
| ***H04N 19/597(2014.01)i, H04N 19/85(2014.01)i, H04N 13/00(2006.01)i*** |
| According to International Patent Classification (IPC) or to both national classification and IPC |

| B. FIELDS SEARCHED |
| --- |
| Minimum documentation searched (classification system followed by classification symbols)<br>H04N 19/597; H04N 19/14; H04N 19/70; H04N 19/103; H04N 19/85; H04N 13/00 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: boundary filter, partition, residual signal, prediction signal, encoding, decoding |

| C. DOCUMENTS CONSIDERED TO BE RELEVANT | | |
| --- | --- | --- |
| Category* | Citation of document, with indication, where appropriate, of the relevant passages | Relevant to claim No. |
| Y | KR 10-2013-0038360 A (LG ELECTRONICS INC.) 17 April 2013<br>See paragraphs [0044]-[0046], [0054]-[0056] and figure 23. | 1-20 |
| Y | FABIAN JAGER et al. "CE3-related: Depth-based Block Partitioning", Joint Collaborative Team on 3D Video Coding Extensions of ITU-T SG 16 WP 3 and ISO/IEC JTC 1/SC 29/WG 11, 5th Meeting: Vienna, AT, JCT3V-E0118, 21 July 2013, pages 1-8.<br>See page 2. | 1-20 |
| Y | KR 10-2012-0082606 A (SAMSUNG ELECTRONICS CO., LTD.) 24 July 2012<br>See paragraphs [0046]-[0052] and figure 4. | 3,11 |
| Y | YUNSEOK SONG et al. "3D-CE3.a results on depth boundary filtering", Joint Collaborative Team on 3D Video Coding Extension Development of ITU-T SG 16 WP 3 and ISO/IEC JTC 1/SC 29/WG 11, 1st Meeting: Stockholm, SE, JCT3V-A0060, 12 July 2012, pages 1-5.<br>See pages 1-3 and figures 1, 4. | 5-7,13-15 |

☒ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 JUNE 2015 (04.06.2015) | **10 JUNE 2015 (10.06.2015)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT

International application No.

**PCT/KR2015/002675**

C (Continuation).    DOCUMENTS CONSIDERED TO BE RELEVANT

| Category* | Citation of document, with indication, where appropriate, of the relevant passages | Relevant to claim No. |
|---|---|---|
| A | JIAN-LIANG LIN et al. "3D-CE5 related: Removal of boundary filters for depth intra prediction", Joint Collaborative Team on 3D Video Coding Extensions of ITU-T SG 16 WP 3 and ISO/IEC JTC 1/SC 29/WG 11, 7th Meeting: San Jose, US JCT3V-G0051, 06 January 2014, pages 1-5.<br>See pages 1-2 and figures 1-2. | 1-20 |

Form PCT/ISA/210 (continuation of second sheet) (July 2009)

INTERNATIONAL SEARCH REPORT
Information on patent family members

International application No.

**PCT/KR2015/002675**

| Patent document cited in search report | Publication date | Patent family member | Publication date |
|---|---|---|---|
| KR 10-2013-0038360 A | 17/04/2013 | CN 103229507 A | 31/07/2013 |
| | | EP 2645715 A2 | 02/10/2013 |
| | | EP 2645715 A4 | 28/05/2014 |
| | | JP 2014-501090 A | 16/01/2014 |
| | | KR 10-1478959 B1 | 06/01/2015 |
| | | KR 10-1505755 B1 | 24/03/2015 |
| | | KR 10-2014-0043844 A | 10/04/2014 |
| | | KR 10-2014-0099510 A | 12/08/2014 |
| | | MX 2013005754 A | 01/08/2013 |
| | | US 2013-0142259 A1 | 06/06/2013 |
| | | WO 2012-070857 A2 | 31/05/2012 |
| | | WO 2012-070857 A3 | 19/07/2012 |
| KR 10-2012-0082606 A | 24/07/2012 | US 2012-0183057 A1 | 19/07/2012 |

Form PCT/ISA/210 (patent family annex) (July 2009)